# EUROPEAN PATENT SPECIFICATION

(11) **EP 4 000 231 B1**
(45) Date of publication and mention of the grant of the patent: **05.03.2025**
(21) Application number: 19762478.6
(22) Date of filing: 18.07.2019
(51) Int. Cl.: H04L 47/10, H04L 9/40, H04L 69/16, H04L 69/164, H04W 12/03, H04L 69/22

(54) **METHOD AND SYSTEM FOR IN-BAND SIGNALING IN A QUIC SESSION**
VERFAHREN UND SYSTEM ZUR BANDINTERNEN SIGNALISIERUNG IN EINER QUIC-SITZUNG
PROCÉDÉ ET SYSTÈME DE SIGNALISATION INTRABANDE DANS UNE SESSION QUIC

(43) Date of publication of application: 25.05.2022
(73) Proprietor: Telefonaktiebolaget LM Ericsson (publ), 164 83 Stockholm (SE)
(72) Inventor: SARKER, Zaheduzzaman, 176 50 Järfälla (SE); WESTERLUND, Magnus, 194 55 Upplands Väsby (SE); MUÑOZ DE LA TORRE ALONSO, Miguel Angel, 28002 Madrid (ES); FERLIN, Simone, 16872 Stockholm (SE); IHLAR, Marcus, 125 74 Älvsjö (SE); KUEHLEWIND, Mirja, 71634 Ludwigsburg (DE)
(74) Representative: Ericsson
(86) International application number: PCT/IB2019/056180
(87) International publication number: WO 2021/009553

(56) References cited:
- WO-A1-2019/037852
- US-A1- 2019 028 440

## Description

### TECHNICAL FIELD

Embodiments of the invention relate to the field of networking; and more specifically, to in-band signaling in a QUIC session.

### BACKGROUND ART

Today's networks do more than just forwarding traffic. It is common practice for a network operator to capture traffic traversing its network for monitoring, inspection and/or classification, so that necessary measures can be taken to ensure good network health and/or user experience. When unencrypted application and/or transport protocols (such as Hypertext Transfer Protocol (HTTP), partially HTTP Secure (HTTPS), or Transmission Control Protocol (TCP)) are used, network operators usually do not require close collaboration with service providers. However, as service providers are deploying encrypted protocols (such as HTTP Version 3 (HTTP/3) or QUIC) at a fast pace, it is becoming more difficult for operators to use traffic for network monitoring or application optimization purposes in a non-collaborative way. To use network functions that optimize traffic or provide differential treatment when traffic is encrypted, the network operator and the Over-The-Top (OTT) service provider need to collaborate. Through this kind of collaboration, network operators and OTT providers can discover and/or negotiate the existence of a proxy (e.g., a QUIC proxy) or a QUIC performance enhancement function, which can be configured.

The collaboration may be provided through an exposure framework, which is supported by 3GPP (the third Generation Partnership Project) and provides out of band channels for network and service providers to collaborate. However, this requires all networks in the Internet to also support this 3GPP exposure framework. It also means that there will be a mix of 4G and 5G specific exposure interfaces. As such, similar to other out-of-band discovery mechanisms, the 3GPP exposure framework can only be utilized within certain network scenarios and therefore would only lead to particular deployment of functions like network operator provided QUIC proxies or performance enhancement nodes, while the use of in-band discovery mechanisms would be independent of the network setup.

US2019028440A1 discloses a relay-proxy device having first and second interfaces allowing connection to a first node and a second node respectively, wherein the relay-proxy device is configured with at least one key, and the relay-proxy device is operable to: receive a traffic flow in an encrypted transport protocol on the first interface; decrypt a first part of the traffic flow with said key, wherein a second part of the traffic flow cannot be decrypted with said key; perform a management function based on a content of the decrypted first part of the traffic flow; and forward at least the second part of the encrypted traffic flow to the second interface.

WO2019037852A1 discloses a proxy at a border between two transport domains, the proxy arranged to deliver packets to a communications device in a first transport domain; the packets received from a server in a second transport domain. The proxy is arranged to: receive a packet from the server, the packet directed to the communications device; and forward the packet to the communications device and reply to the server with a traffic handling offer message, the traffic handling offer message including a plurality of traffic handling options. The proxy is further arranged to receive a selection of a traffic handling option from the server; and apply the selected traffic handling option to packets sent from the server to the communications device via the proxy.

### SUMMARY

The present invention is defined by the appended independent claims, to which reference should now be made. Specific embodiments are defined in the dependent claims.

Embodiments of the disclosed techniques provide ways for a network device on a path of a QUIC session between a client network device and a server network device to notify securely the initiating network device (the client or server network device) about performance enhancement features that the network device may provide.

### BRIEF DESCRIPTION OF THE DRAWINGS

The invention may best be understood by referring to the following description and accompanying drawings that are used to illustrate embodiments of the invention. In the drawings:
**Figure 1** shows the 5G reference architecture as defined by 3GPP (the third Generation Partnership Project).
**Figure 2** shows a Collaborative Performance Enhancement (COPE) packet adding to a forward path from a client to a server.
**Figure 3** shows a COPE packet adding to a forward path and reverse path between a client and a server.
**Figure 4** shows exemplary information included in a COPE packet.
**Figure 5** is a flow diagram showing the operations of an intermediate network device for in-band signaling according to the claimed invention.
Figure 6 is a flow diagram showing the operations of a network device implementing a server of a QUIC session for in-band signalling.
**Figure 7** is a flow diagram showing the operations of a network device implementing a client of a QUIC session for in-band signalling.
**Figure 8A** illustrates connectivity between network devices (NDs) within an exemplary network, as well as three exemplary implementations of the NDs.
**Figure 8B** illustrates an exemplary way to implement a special-purpose network device.
**Figure 8C** illustrates various exemplary ways in which virtual network elements (VNEs) may be coupled.
**Figure 8D** illustrates a network with a single network element (NE) on each of the NDs, and within this straight forward approach contrasts a traditional distributed approach (commonly used by traditional routers) with a centralized approach for maintaining reachability and forwarding information (also called network control).
**Figure 8E** illustrates the simple case of where each of the NDs implements a single NE, but a centralized control plane has abstracted multiple of the NEs in different NDs into (to represent) a single NE in one of the virtual network(s).
**Figure 8F** illustrates a case where multiple VNEs are implemented on different NDs and are coupled to each other, and where a centralized control plane has abstracted these multiple VNEs such that they appear as a single VNE within one of the virtual networks.

### DETAILED DESCRIPTION

The following description describes methods and apparatus for secured information exchange between intermediate and endpoint nodes in a communications network. In the following description, numerous specific details such as logic implementations, opcodes, means to specify operands, resource partitioning/sharing/duplication implementations, types and interrelationships of system components, and logic partitioning/integration choices are set forth in order to provide a more thorough understanding of the present invention. It will be appreciated, however, by one skilled in the art that the invention may be practiced without such specific details. In other instances, control structures, gate level circuits and full software instruction sequences have not been shown in detail in order not to obscure the invention. Those of ordinary skill in the art, with the included descriptions, will be able to implement appropriate functionality without undue experimentation.

### Terms

References in the specification to "one embodiment," "an embodiment," "an example embodiment," etc., indicate that the embodiment described may include a particular feature, structure, or characteristic, but every embodiment may not necessarily include the particular feature, structure, or characteristic. Moreover, such phrases are not necessarily referring to the same embodiment. Further, when a particular feature, structure, or characteristic is described in connection with an embodiment, it is submitted that it is within the knowledge of one skilled in the art to affect such feature, structure, or characteristic in connection with other embodiments whether or not explicitly described.

Bracketed text and blocks with dashed borders (e.g., large dashes, small dashes, dot-dash, and dots) may be used herein to illustrate optional operations that add additional features to embodiments of the invention. However, such notation should not be taken to mean that these are the only options or optional operations, and/or that blocks with solid borders are not optional in certain embodiments of the invention.

In the following description and claims, the terms "coupled" and "connected," along with their derivatives, may be used. It should be understood that these terms are not intended as synonyms for each other. "Coupled" is used to indicate that two or more elements, which may or may not be in direct physical or electrical contact with each other, co-operate or interact with each other. "Connected" is used to indicate the establishment of communication between two or more elements that are coupled with each other.

The term "node" can be a network node/device that communicatively interconnects other electronic devices on the network (e.g., other network devices, end-user devices). Some network devices are "multiple services network devices" that provide support for multiple networking functions (e.g., routing, bridging, switching, Layer 2 aggregation, session border control, Quality of Service, and/or subscriber management), and/or provide support for multiple application services (e.g., data, voice, and video). Examples of network nodes also include NodeB, base station (BS), multi-standard radio (MSR) radio node such as MSR BS, eNodeB, gNodeB. MeNB, SeNB, integrated access backhaul (IAB) node, network controller, radio network controller (RNC), base station controller (BSC), relay, donor node controlling relay, base transceiver station (BTS), Central Unit (e.g., in a gNB), Distributed Unit (e.g., in a gNB), Baseband Unit, Centralized Baseband, C-RAN, access point (AP), transmission points, transmission nodes, RRU, RRH, nodes in distributed antenna system (DAS), core network node (e.g., MSC, MME, etc.), O&M, OSS, SON, positioning node (e.g., E-SMLC), etc.

Another example of a node is an end-user device, which is a non-limiting term and refers to any type of wireless and wireline device communicating with a network node and/or with another UE in a cellular/mobile/wireline communication system. Examples of end-user device are target device, device to device (D2D) user equipment (UE), vehicular to vehicular (V2V), machine type UE, MTC UE or UE capable of machine to machine (M2M) communication, PDA, Tablet, mobile terminals, smart phone, laptop embedded equipment (LEE), laptop mounted equipment (LME), Internet-of-Things (IoTs) electronic devices, USB dongles, etc.

A node may be an endpoint node of a traffic flow (also simply referred to as "flow") or an intermediate node (also referred to as an on-path node) of the traffic flow. The endpoint node of the traffic flow may be a source or destination node (or sender and receiver node, respectively) of the traffic flow, which is routed from the source node, passing the intermediate node, and to the destination node. A flow may be defined as a set of packets whose headers match a given pattern of bits. A flow may be identified by a set of attributes embedded to one or more packets of the flow. An exemplary set of attributes includes a 5-tuple (source and destination IP addresses, a protocol type, source and destination TCP/UDP ports).

A node comprises an electronic device. An electronic device stores and transmits (internally and/or with other electronic devices over a network) code (which is composed of software instructions and which is sometimes referred to as computer program code or a computer program) and/or data using machine-readable media (also called computer-readable media), such as machine-readable storage media (e.g., magnetic disks, optical disks, solid state drives, read only memory (ROM), flash memory devices, phase change memory) and machine-readable transmission media (also called a carrier) (e.g., electrical, optical, radio, acoustical or other forms of propagated signals - such as carrier waves, infrared signals). Thus, an electronic device (e.g., a computer) includes hardware and software, such as a set of one or more processors (e.g., of which a processor is a microprocessor, controller, microcontroller, central processing unit, digital signal processor, application specific integrated circuit (ASIC), field programmable gate array (FPGA), other electronic circuitry, a combination of one or more of the preceding) coupled to one or more machine-readable storage media to store code for execution on the set of processors and/or to store data. For instance, an electronic device may include non-volatile memory containing the code since the non-volatile memory can persist code/data even when the electronic device is turned off (when power is removed). When the electronic device is turned on, that part of the code that is to be executed by the processor(s) of the electronic device is typically copied from the slower non-volatile memory into volatile memory (e.g., dynamic random-access memory (DRAM), static random-access memory (SRAM)) of the electronic device. Typical electronic devices also include a set of one or more physical network interface(s) (NI(s)) to establish network connections (to transmit and/or receive code and/or data using propagating signals) with other electronic devices. For example, the set of physical NIs (or the set of physical NI(s) in combination with the set of processors executing code) may perform any formatting, coding, or translating to allow the electronic device to send and receive data whether over a wired and/or a wireless connection. In some embodiments, a physical NI may comprise radio circuitry capable of (1) receiving data from other electronic devices over a wireless connection and/or (2) sending data out to other devices through a wireless connection. This radio circuitry may include transmitter(s), receiver(s), and/or transceiver(s) suitable for radiofrequency communication. The radio circuitry may convert digital data into a radio signal having the proper parameters (e.g., frequency, timing, channel, bandwidth, and so forth). The radio signal may then be transmitted through antennas to the appropriate recipient(s). In some embodiments, the set of physical NI(s) may comprise network interface controller(s) (NICs), also known as a network interface card, network adapter, or local area network (LAN) adapter. The NIC(s) may facilitate in connecting the electronic device to other electronic devices allowing them to communicate with wire through plugging in a cable to a physical port connected to a NIC. One or more parts of an embodiment of the invention may be implemented using different combinations of software, firmware, and/or hardware.

QUIC is a general-purpose transport layer network protocol. While it may be referred to as the acronym for Quick User Datagram Protocol (UDP) Internet Connections, some organizations (e.g., Internet Engineering Task Force, IETF) refer to QUIC as the name of the protocol without treating it as an acronym. QUIC may be viewed as similar to Transmission Control Protocol (TCP) + enhancement such as Transport Layer Security (TLS) and/or Hypertext Transfer Protocol 2.0 (HTTP/2 or HTTP/2.0) but implemented on top of UDP. QUIC is therefore a UDP based stream-multiplexed and secure transport protocol with integrity protected header and encrypted payload. Yet unlike the traditional transport protocol stack with TCP (Transmission Control Protocol), which resides in the operating system kernel, QUIC can easily be implemented in the application layer. Consequently, this improves flexibility in terms of transport protocol evolution with implementation of new features, congestion control, deployability, and adoption. QUIC uses TLS for security handshake by default. TLS exchanges the necessary keying material in the protocol's handshake. The use of TLS (defined in IETF Request for Comments (RFC) 8446) or Datagram TLS (DTLS) (under discussion, see IETF Internet-Draft draft-ietf-tls-dtls13-31 dated March 25, 2019) is very common as a transport security solution independent from the underlying transport protocol being TCP or UDP. Note that HTTP-over-QUIC is sometimes referred to as HTTP/3 as approved by IETF.

While QUIC standardization efforts started less than 7 years ago, presently it represents nearly 10% of the Internet traffic pushed by large Internet domains. QUIC is becoming a main transport protocol in the Internet's user plane. Many applications running today over HTTP/HTTPS may migrate to QUIC, driven by QUIC's latency improvements and stronger security. Notably, encryption in QUIC covers both the transport protocol headers as well as the payload, as opposed to TLS over TCP (e.g., HTTPS), which protects only the payload.

A proxy is an intermediary program/software (or hardware such as a network node implementing such intermediary program/software) acting as a server, a client, or a combination of the server or client for some functionalities as the proxy may create or simply relay requests on behalf of other entities. The proxy may be implemented on a path between a server and a client. Note that each of the client, server, and proxy may be implemented in one or more network nodes such as client nodes, server nodes, and intermediate (on-path) nodes, respectively. Each of a server or client node may be referred to as an endpoint node. Requests are serviced internally or by passing them on, with possible translation, to other servers. There are several types of proxies, including the following: (1) A "transparent proxy" is a proxy that does not modify the request or response beyond what is required for proxy authentication and identification; (2) A "non-transparent proxy" is a proxy that modifies the request or response to provide some added service to the user agent, such as group annotation services, media type transformation, protocol reduction, or anonymity filtering; (3) A "reverse proxy" basically is a proxy that pretends to be the actual server (as far as any client or client proxy is concerned), but it passes on the request to the actual server that is usually sitting behind another layer of firewalls; and (4) A "performance enhancement proxy" (PEP) is used to improve the performance of protocols on network paths where native performance suffers due to characteristics of a link or subnetwork on the path.

### 5G Reference Architecture

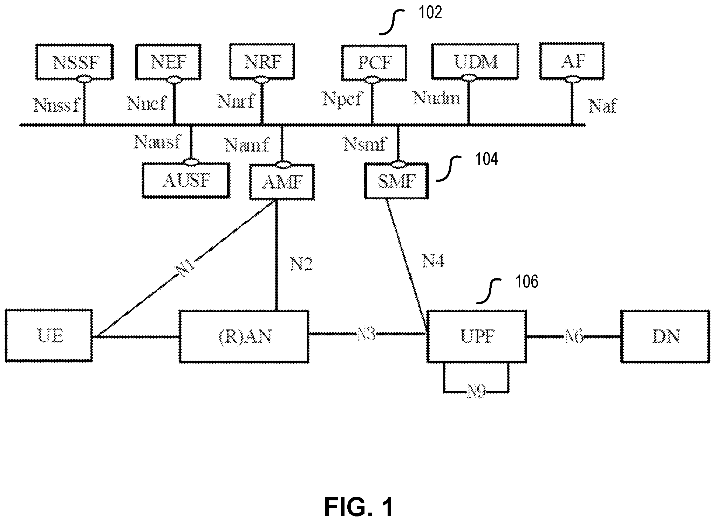

Figure 1 shows the 5G reference architecture as defined by 3GPP (the third Generation Partnership Project). The relevant architectural aspects for embodiments of the invention include the following blocks: policy control function (PCF) 102, session management function (SMF) 104, and user plane function (UPF) 106.

### Policy Control Function (PCF)

The Policy Control Function (PCF) 102 supports a unified policy framework to govern the network behavior. Specifically, for this invention, the PCF provides Policy and Charging Control (PCC) rules to the Policy and Charging Enforcement Function (PCEF), i.e., the SMF/UPF that enforces policy and charging decisions according to provisioned PCC rules.

### Session Management Function (SMF)

The Session Management Function (SMF) 104 supports different functionalities. Specifically, for this invention, SMF receives PCC rules from the PCF and configures the UPF accordingly.

### User Plane Function (UPF)

The User Plane Function (UPF) 106 supports handling of user plane traffic based on the rules received from the SMF; specifically, for this invention, packet inspection and different enforcement actions such as Quality of Service (QoS), charging, etc.

### Over-The-Top (OTT) Services on the Internet

OTT services are provided by a service provider across one or multiple IP networks, namely, the Internet. The service provider here is solely responsible for content controlling and distribution and they usually do it by bypassing telecommunication, Internet Service Providers (ISPs), or broadcast channels; treating the Internet as a black box. Even though the basic principle of operation is "best-effort," both service and network providers deploy many techniques to QoS guarantees. These include Content Delivery Network (CDN), caching, proxying, load balancing, transport protocol optimization for cellular and satellite networks and other traffic engineering.

3GPP supports an exposure framework between Content Provider(s) and Network Operator(s), and the exposure framework is based on control plane signaling (which is an out-of-band channel separate from the user's data traffic). This framework allows content providers to cooperate with the network operator on, for example, policy enforcement and quality assurance. Yet this architecture is not widely used from the beginning of the deployment of an OTT service because it requires particular Service Level Agreements (SLAs) to be in place between multiple, if not all, parties involved. Moreover, this is costly and rather difficult to achieve.

### In-Band Signaling Using Collaborative Performance Enhancement (COPE) Packet

To overcome limitations of out-of-band signaling, embodiments of the invention include an in-band method for discovery and configuration of a QUIC proxy or performance enhancement function. The in-band signaling happens when a QUIC client first sends an initial packet to a QUIC or application server or to another communication peer. The QUIC proxy, or a performance enhancement function, residing in the network, may add its identity and functionalities in the QUIC initial packet. Upon receiving the QUIC initial packet with the QUIC proxy or performance enhancement function information, the server or the client can then choose to start communicating using or via the QUIC proxy or performance enhancement function. Note that as known in the art, the QUIC initial packet format is defined in standards such as the IETF Internet-Draft entitled "QUIC: A UDP-Based Multiplexed and Secure Transport," draft-ieft-quic-transport-22, dated July 09, 2019. QUIC packets, including the QUIC initial packets, are carried in UDP datagrams, which may be transmitted within one or more IP packets.

The QUIC proxy or performance enhancement function information, may be conveyed in a packet and it is referred to as a COPE packet. A QUIC proxy or performance enhancement feature/functions may use the COPE packet to convey its existence in the network to the service provider or to the client or to the communicating peers.

In one embodiment, a client adds the COPE packet in the same UDP payload as the QUIC initial packet with the Crypto frame containing the TLS client hello, where the UDP datagram containing the QUIC initial packet and the COPE packet may be referred to as the initial UDP datagram. The COPE packet may also be added in a UDP datagram after the initial UDP datagram (e.g., the UDP datagram may contain the same 5-tuple as the initial UDP datagram) in an alternative embodiment. In one embodiment, the COPE packet may be added as an UDP Option or as an IPv6 Destination Header Extension in the IPv6 extension header chain in the initial UDP or a subsequent UDP datagram. Note that the UDP Option is defined in standards such as the IETF Internet-Draft entitled "Transport Options for UDP," draft-ietf-tsvwg-udp-options-07, dated March 8, 2019; and the IPv6 Destination Header Extension is defined in standards such as IETF RFC 8200, entitled "Internet Protocol, Version 6 (IPv6) Specification," dated July 2017.

The content of the COPE packet can be written by any COPE node, normally adding items in that packet. A COPE node may be implemented in a network device containing the QUIC proxy and/or performance enhancement features/functions, and it is an intermediate/on-path node (referred to as a COPE node for it implementing the COPE functions) between the client and server. The COPE nodes may add discovery information in the COPE packet and transmit it to the server. The server may then send the inserted discovery information to the client when it recognizes the COPE packet, or it may discard the COPE packet when it does not recognize the COPE packet or determine not to allow the COPE functions. Independently of how the COPE packet is included in the IP packet (e.g., in an UDP payload, as an UDP option or an IPv6 Destination Header Extension) from the client to the server, the inserted information by the COPE node can be sent as a QUIC frame in the return path from the server to the client.

The discovery information includes at least two types. The first type of discovery information is to enable further communication (direct or not) with the proxy or performance enhancement function, such as identity (e.g., certificate common name), IP address, and UDP port, public keys, cipher algorithms, and other parameters of the COPE node and its functions. The proxy may be able to combine the information (including the information about the source of the QUIC packet, for example, the client hello in the QUIC initial packet or the received COPE packet) to generate a TLS session ticket (see IETF RFC 5077) or an equivalent mechanism that can enable the source of the QUIC packet to communicate more securely in any subsequent initial set of packets intended for the COPE node. The second type of discovery information is related to capabilities of the proxy or performance enhancement feature/function (sometimes referred to by the acronym of PEF); this could be, for example, using sets of defined roles or capabilities. The COPE nodes may encrypt the content of the COPE packet so that it is only decryptable by the client. For example, the encryption may be performed to generate protected data using the method/system disclosed in a co-pending international application, entitled "Method and System for Secured Information Exchange Between Intermediate and Endpoint Nodes in a Communications Network".

The COPE packets may be edited to put COPE node related information by the COPE nodes in the forward (client to server) or reverse (server to client) path. A COPE node may identify IP/UDP packets with QUIC packets belonging to a new or existing QUIC session, including a QUIC session where a path change occurs so that a pre-existing QUIC session becomes visible for the COPE node for a first time. Note that the identification of a new or pre-existing QUIC session is defined in standards such as the IETF Internet-Draft entitled "QUIC: A UDP-Based Multiplexed and Secure Transport," draft-ieft-quic-transport-22, dated July 09, 2019.

COPE packets may be formatted as QUIC packets. They have a Packet Type identifying them as COPE packets in one embodiment. A COPE packet may contain one or more frames of different types. The different frames may carry information either from the client to the COPE node, or from any COPE node on the path. The frames provide a structure to delimit the different information objects.

### Operations at Various Nodes of a QUIC Session

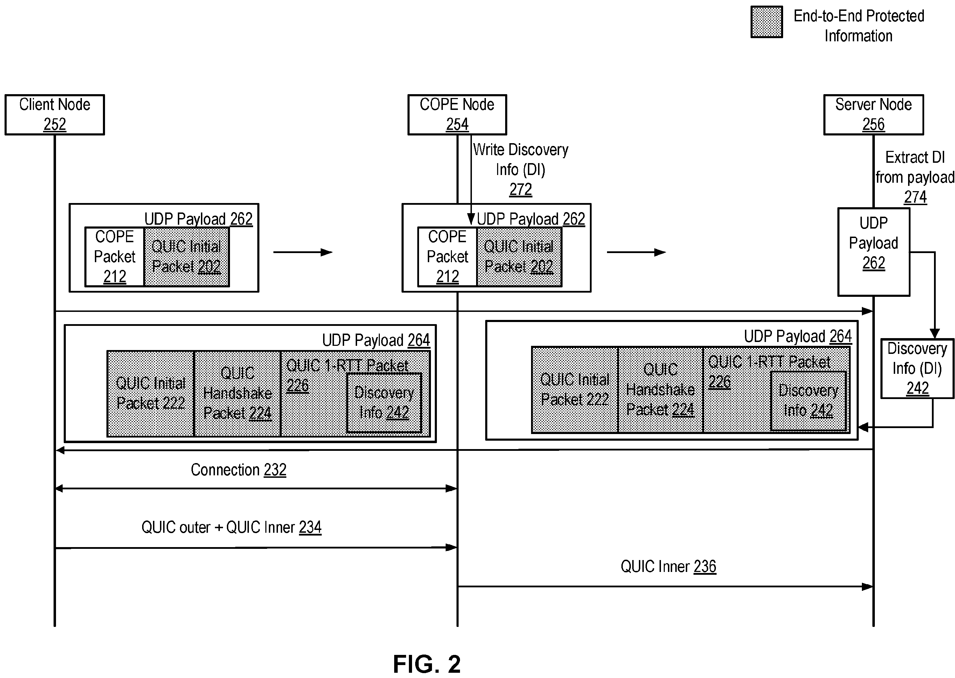

**Figure 2** shows a COPE packet adding to a forward path from a client to a server per one embodiment of the invention. The forward path is within a communication network with the client node 252 as the sender node (also referred to as sender, sending/initiating node, or flow initiator), the server node 256 as the receiver node (also referred to as receiver, receiving node, or flow destination), and the COPE node 254 as the on-path node (also referred to as an intermediate node or middlebox).

### QUIC Client: COPE packet Generation

The client node 252 (a QUIC client) may include a COPE packet (212) in its UDP payload (262) to indicate to network devices on the path that it supports COPE using the mechanism described herein. The UDP payload (262) also includes a QUIC initial packet (202). These COPE packets may be included in several packets during the initial handshake as well as during any path migration, as well as periodically.

A COPE packet may also include the client's public key to ensure that a COPE node such as the COPE node 254 can protect its information destined to the client. This is important for QUIC connections that are migrated to use new paths, where COPE nodes will not have seen the initial packets with any keying material.

A client-initiated COPE packet may reserve a certain amount of space for COPE data objects to ensure that path maximum transmission unit (MTU) is considered. Such a packet may have a special type to identify that COPE nodes may not further enlarge the COPE packet.

The client may include a signature in the COPE packet over the client included information as well as the general structure and length of the COPE packet to be validated by the server or a COPE node.

### COPE Node: Detection and COPE Packet Generation

In one embodiment, when a COPE node such as the COPE node 254 detects QUIC packets from a previous unknown QUIC connection, it may look at all the QUIC packets included in the UDP payload to see if a COPE packet is included. If that is the case, the COPE node uses that COPE packet to write discovery information at reference 272; otherwise, it may use a new COPE packet (e.g., select to include the COPE packet in the UDP payload as shown in Figure 2, or as an UDP option or an IPv6 Destination Header Extension). In one embodiment, the COPE node may validate one or more signatures included in the COPE packets (e.g., when the client provides an identity that is rooted in a trust root that the COPE node accepts so that the COPE node may check the client's signatures, and this is an alternative to the embodiments where the server checks the client's signature discussed herein).

When the COPE packet includes the client public key, the COPE node may store that key for future communication towards the client in subsequent QUIC packets.

The COPE node may create a frame for the COPE packet with the discovery information it wants the client to receive. That information is protected, for example, as described in the co-pending international application, entitled "Method and System for Secured Information Exchange Between Intermediate and Endpoint Nodes in a Communications Network." The resulting protected information object is then encapsulated in the frame to enable delimitation. If there is room for the frame in the COPE packet, the protected information object is added. If not, the COPE packet may be enlarged to fit the frame. However, this may result in the resulting UDP payload exceeding the Path MTU. In case of client added COPE packets, they should not be enlarged; in that case, it is better to store the frame and include that in a COPE packet sent with a subsequent QUIC packet. Note that the COPE node may insert the discovery information unprotected or protect the discovery information using the server's public key when it is known in some embodiments. A subsequent QUIC packet can be an IP/UDP packet with a QUIC packet that belongs to the same QUIC connection as the one triggering the inclusion of the COPE packet with sufficient space compared to the MTU to fit the COPE packet. Alternatively, a subsequent QUIC packet could also be an UDP datagram that only contains a COPE packet but using the IP+UDP 5-tuple and Destination Connection ID (DCID) / Source Connection ID (SCID) from the QUIC connection triggering the inclusion of the COPE packet.

Thus, in some embodiments, a COPE packet may be transported to a COPE node (1) with a QUIC packet, (2) using UDP options, or (3) using IPv6 Destination Header Extension as protected data as explained in the co-pending international application, entitled "Method and System for Secured Information Exchange Between Intermediate and Endpoint Nodes in a Communications Network." Note that while the QUIC initial packet (202) is encrypted when it arrives at the COPE node 254, the discovery information that is generated by the COPE node 254 is encrypted prior to sending to the server node 256.

### QUIC Server: COPE Packet Reception

At a server such as the server node 256, upon receiving a COPE packet, the server checks to see if the COPE packet contains a client signature. If that is the case, it uses the associated QUIC connections security context to verify the signature or another known trust for the client's identity or a chain of trust validations to a trusted root. If the signature fails, the COPE packet is dropped, as it may indicate an attempt for an on-path attacker to impersonate the client. Note that to perform this verification, the server may have to first process the other QUIC packets part of the UDP payload.

If the server node 256 verifies the signature or none was included, the server may relay the COPE packet's (212) discovery information 242 in a new QUIC frame type (COPE Relay frame), where the UDP payload 264 contains a QUIC initial packet 222 to the client node 252, and other packets. As shown at reference 274, the server node 256 extracts from the UDP payload 262 the discovery information 242. The discovery information 242 is then added to the QUIC packet with the best protection level established and sent to the client. For example, the discovery information may be included in a QUIC packet such as a QUIC Handshake packet (224) and/or a QUIC 1-RTT (one round-trip-time) key protected short header packet (226). Note that the packets are encrypted (or remain encrypted from the COPE node 254 in the case of COPE packet (212)). In one embodiment, during the beginning of the QUIC handshake, this will be the QUIC handshake packet carrying a CRYPTO frame with the TLS information objects such as Encrypted Extensions, Certificate, Certificate Verify and Finished. When the COPE packets are received in another packet, the discovery information 242 may be included in a COPE Relay Frame included in the QUIC packet with the best available protection level being sent to the client, for example, a 1-RTT key protected short header packet.

Alternatively, the server node 256 may complete or partially remove COPE packets or their discovery information. The server node 256 may decide on usage of COPE in a particular session; it may remove discovery information from malfunctioning COPE node(s) if the identity is unknown or if the identity is known but the COPE function/features are undesirable; and it may restrict the use of multiple COPE nodes.

When a COPE node has also provided its certificate unencrypted or encrypted using one of the server's public keys, then the server can identify the COPE node and decide whether it should allow the COPE node for performance enhancement or not. An end-to-end QUIC connection may be encapsulated in a QUIC connection between the COPE node and the server. This enables the COPE node to perform congestion control and other performance enhancement functions. The server may use this connection to expose information to the COPE node that is potentially useful for the performance enhancement, an example of such information is inter-stream priorities. Alternatively, when the server accepts a QUIC connection from a client that is processed by a COPE node, the server may establish or accept an additional QUIC connection used for example to expose information to the COPE node that is potentially useful for the performance enhancement, like in the above mentioned encapsulated method.

### QUIC Client: COPE Packet Reception in the Reverse Path

At the client node 252, if COPE packets are received in a COPE Relay frame as a part of any QUIC packet included in the UDP payload (264), the client may (1) validate the identity of the one or more COPE nodes that insert information in the COPE packet; (2) decide to use one or more of the COPE nodes inserting the information; (3) select the feature/functionalities of the COPE node to be used; and (4) initiate a new QUIC connection via the selected COPE node(s).

Note that when adding COPE packets in the forward path, it may be possible to remove or edit the information on any node between the COPE node and the server in some embodiments. However, in other embodiments, the COPE packets are encrypted thus any attempts to edit the information have to be done blindly, however the complete object may still be removed by a third party. Additionally/alternatively, the information may be signed thus preventing editing but not removal of the whole object.

A connection 232 may then be established between the client node 252 and the selected COPE node 254 (in this example). The connection may use QUIC outer and inner headers at reference 234. The QUIC outer refers to a QUIC connection that is established between an endpoint and a COPE node, e.g., between the client node 252 and the COPE node 254; and it encapsulates the "inner" end-to-end connection at reference 236 between the client node 252 and the server node 256.

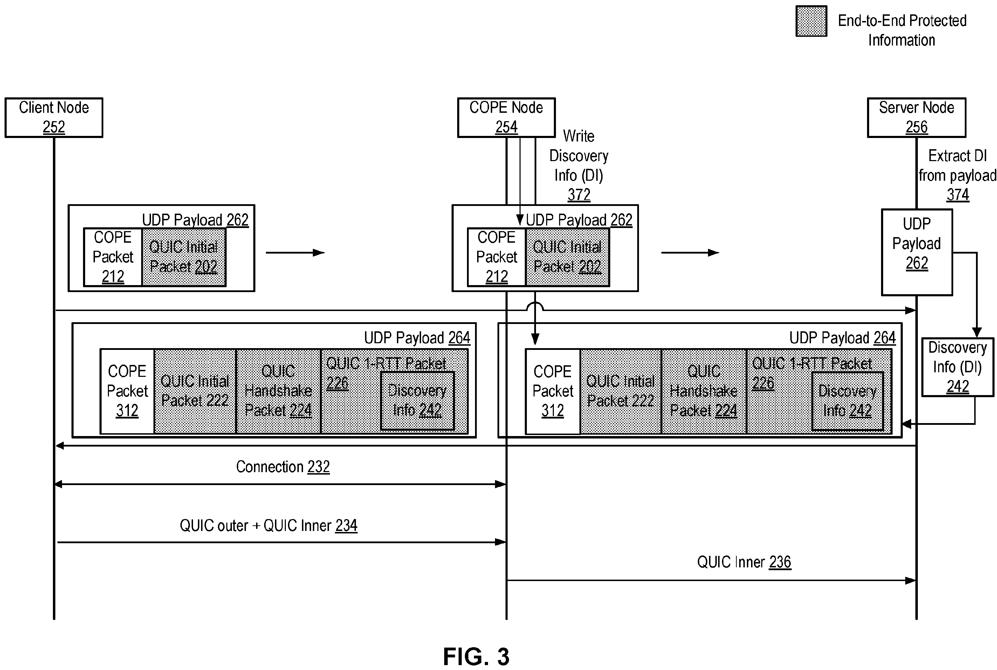

Note that traffic from the client node 252 to the server node 256 may not include the same COPE nodes as in the other direction of server node 256 to client node 252, and COPE nodes may be implemented to add/modify COPE packets on the reverse path also. **Figure 3** shows a COPE packet adding to a forward path and reverse path between a client and a server per one embodiment of the invention. Similar to Figure 2, in Figure 3, a difference is that the COPE node inserts discovery information in a COPE packet (312) on the reverse path. Figure 3 also shows that the COPE node inserts discovery information at reference 372 on both forward and reverse paths, e.g., via COPE packets (212) and (312).

For cellular networks the user plane traffic traverses the same UPF in the forward and reverse paths in some embodiments; in alternative embodiments, the UPFs may be distributed.

Note that if the QUIC client and server reverse their roles in the above, then the COPE nodes on the server to client path will be providing the server with information. For the client to be able to directly consume the COPE discovery information, the server would need to add a COPE packet with the client's public key, alternatively that the COPE node knows the client's public key. For symmetric paths, the COPE nodes could use the client's keys known for the client to server direction. For asymmetric paths, the server would need to add the client's public key into the COPE packet itself being sent from the server.

After the client has verified and additionally established communication with a COPE node, it may store the COPE information (e.g., Identity, Address and port, certificate/keying information) for future use. The client may use location or network information to select the set of COPE nodes it wants to use for a particular QUIC session. The client can also utilize the prior communication to speed up connection establishment, such as TLS 1.3 0-RTT handshake session resumption as well as 0-RTT requests. This will allow the client to skip a number of round-trip times between COPE nodes, when establishing a connection via some COPE nodes. However, the client must be prepared to restart the discovery process if its attempt to connect with a previously available COPE node fails.

The client might want to verify or notify the server about the use of COPE nodes. In the scope of this disclosure, the COPE node may encrypt the COPE packet towards the server and, even if the server assumes the usage of a COPE node, it will not be able to know if one is used or what features it provides. When the client wants to get a consent from the server about the usage of one or more COPE nodes for a particular session - it requires another level of communication and information exchange between client and server, i.e., a consent protocol.

### Embodiments of Inserted Information

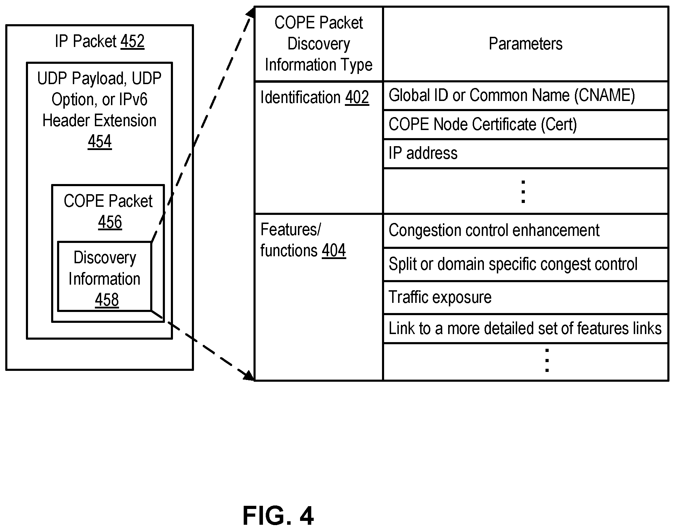

A particular COPE node can be capable of performing a number of functions depending on how much information it receives from the client (or server). Hence, the client and the COPE node need to agree on the COPE node usage. The COPE packet contains all the relevant information to identify and verify a COPE node and describe or declare COPE node features. **Figure 4** shows exemplary information included in a COPE packet per some embodiments of the invention. An IP packet (452) may be transmitted between a client (e.g., the client node 252) and a server (e.g., the server node 256), and pass through an intermediate node (e.g., the COPE node 254) for a QUIC session. The IP packet (452) contains the COPE packet (456), e.g., in either its UDP payload, UDP option, or IPv6 Destination Header Extension as shown at reference 454. The COPE packet includes discovery information 458. In one embodiment, the discovery information 458 included in the COPE packet includes two types - identification information (402) and features/functions (404).

The identification information (402) may include one or more of the COPE node's global identifier or Common Name (CNAME), its node certificate, and optionally its IP address and/or port.

The feature/function part of the information will contain a list of different features/functions the COPE node is able to perform along with the information required to perform those functions. The client can then decide what function it allows the COPE node to perform and exposes that information to the COPE node. For example, the features/function may include the following:
(1) congestion control enhancement function/feature (requested information: notification from the client to the COPE node about the reception of packets from the server to perform the improvement).
(2) a split or domain specific congestion control function/feature (provided information: notification from the COPE node to the client to acknowledge incoming data from the server, or direct acknowledgements of incoming data from the COPE node to the server).
(3) a traffic exposure function/feature (requested information: statistics, reports with destinations). Traffic exposure may include Quality of Experience (QoE) metrics supplied from a client to the network (e.g., collected by a COPE node), it could be information exposed from the network to the application such as subscriber quota status, policy requirements, etc. The statistics and reports include, for example, a video client supplying Media Object Server (MOS) data to the network via COPE; and the COPE node supplies network level statistics to an application, e.g., type of access network, throughput experienced by a user equipment (UE) over a period (e.g., last number of seconds). And,
(4) a link to a more detailed set of function/feature list (e.g., a HTTPS link).

The endpoint and COPE node will agree on the feature usage. The encryption of the COPE packets may use the existing encryption algorithms known in the art. For example, the encryption can use so-called hybrid encryption algorithm (e.g., Elliptic Curve Integrated Encryption Scheme (ECIES)) consisting of a key encapsulation mechanism and a data encapsulation mechanism) or other symmetric/asymmetric encryption algorithms.

### Some Embodiments

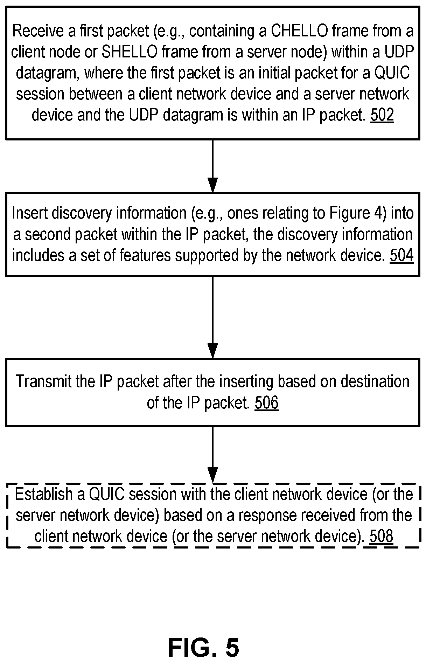

**Figure 5** is a flow diagram showing the operations of an intermediate network device for in-band signaling according to the claimed invention. The intermediate network device may be the COPE node as discussed herein above.

At reference 502, the network device receives a first packet within a UDP datagram, where the first packet is an initial packet for establishing a QUIC session between a client network device and a server network device. The initial packet is within an IP packet, which includes a UDP datagram. In one embodiment, the initial packet is sourced from the client network device for the QUIC session, and the initial packet is a client's initial packet containing a crypto frame with a TLS Client hello (e.g., a client hello frame CHELLO). In one embodiment, the initial packet is sourced from the server network device for the QUIC session, and wherein the initial packet contains a crypto frame with a TLS server hello (e.g., a server hello frame SHELLO).

At reference 504, the network device inserts discovery information into a second packet within the IP packet, where the discovery information includes a set of features supported by the network device. The second packet may be included as a part of the UDP payload, a UDP option, or IPv6 Header Extension as explained herein. The network device first detects whether a second packet for discovery information exists in the received IP packet; and if it does, the network device may insert the discovery information when the frame size allows such insertion. If no such packet exists, the network device creates the second packet, inserts the discovery information in this second packet, and inserts it in the same UDP datagram as the QUIC initial packet, otherwise it may be inserted in a subsequent QUIC packet, or in the protected data field using UDP options and/or IPv6 Destination Header Extension within a UDP datagram. In one embodiment, the network device encrypts the discovery information. In one embodiment, the discovery information includes identity of the network device. In one embodiment, the identity of the network device includes one or more of its global identifier or common name, its node certificate, and its IP address.

According to the claimed invention, the method further comprises: detecting whether a second packet for discovery information exists in the received IP packet, wherein: if no second packet exists in the received IP packet, the method comprises: creating a second packet, and inserting discovery information into the created second packet within the IP packet, and if a second packet does exist in the received IP packet, the method comprises: inserting the discovery information into the existing second packet within the IP packet.

At reference 506, the network device transmits the IP packet after the inserting based on destination of the IP packet. The destination is the server network device when the UDP datagram contains the client's initial packet, and the destination is the client network device when the UDP datagram is the server's initial packet.

Optionally at reference 508, the network device may establish a QUIC session with the client network device based on a response received from the same client network device. For example, the client network device receives a UDP datagram that includes the discovery information (which is relayed by the server network device), and the client network device initiates a QUIC session with the network device. The QUIC session is established for the network device to perform performance enhancement features such as the ones discussed herein above relating to Figure 4. Alternatively, the network device may establish a QUIC session with the server network device based on a response received from the same server network device.

In one embodiment, the discovery information indicates a set of features that the network device provides. In one embodiment, the set of features includes one or more of a congestion control enhancement, a split or domain specific congestion control, traffic exposure, and a link to a more detailed set of features list.

In one embodiment, the encryption uses a public key of the source network device. In one embodiment, the discovery information has a digital signature added by the network device inserting the discovery information. In one embodiment, the network device obtains keying materials for the encryption from the source or destination network devices (e.g., the client or server network devices).

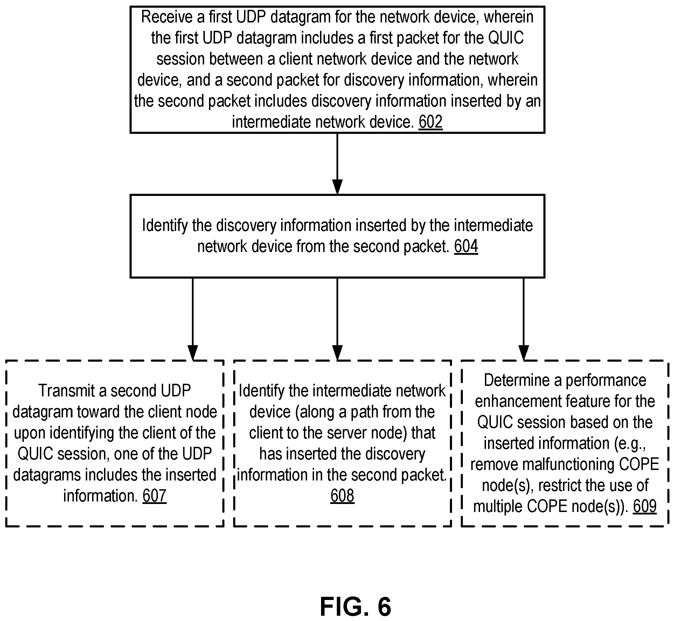

**Figure 6** is a flow diagram showing the operations of a network device implementing a server of a QUIC session for in-band signaling per one embodiment of the invention. The network device implements a server node/network device (server) discussed herein above in one embodiment.

At reference 602, the network device receives a first UDP datagram from a client network device for the server network device, wherein the first UDP datagram includes (1) a first packet for the QUIC session between a client network device and the network device and (2) a second packet for discovery information, where the second packet includes discovery information inserted by an intermediate network device. The discovery information inserted by the intermediate network device comprises the inserted information discussed herein above relating to Figure 4. Note that the first and second packets may be ordered differently in different embodiments, and they may not be consecutive packets within the first UDP datagram.

At reference 604, the network device identifies the discovery information inserted by the intermediate network device from the second packet. As discussed herein above, the inserted information may be encrypted by the intermediate network device and not decryptable by the network device in one embodiment.

Optionally at reference 607, the network device transmits a second UDP datagram toward the client network device upon identifying the client network device of the QUIC session, where one of the UDP datagrams received at the network device includes the inserted information.

Optionally at reference 608, the network device identifies the intermediate network device that has inserted the discovery information in the second packet.

Optionally at reference 609, the network device determines a performance enhancement feature (e.g., one or more of the ones discussed relating to Figure 4) for the QUIC session based on the inserted discovery information. For example, the network device may allow or deny usage of performance enhancement by the intermediate network device for the QUIC session. The network device may also remove one or more malfunctioning intermediate network devices from providing performance enhancement and/or functioning as a proxy for the QUIC session upon determining that the one or more intermediate network devices are malfunctioning based on its inserted discovery information in the second packet.

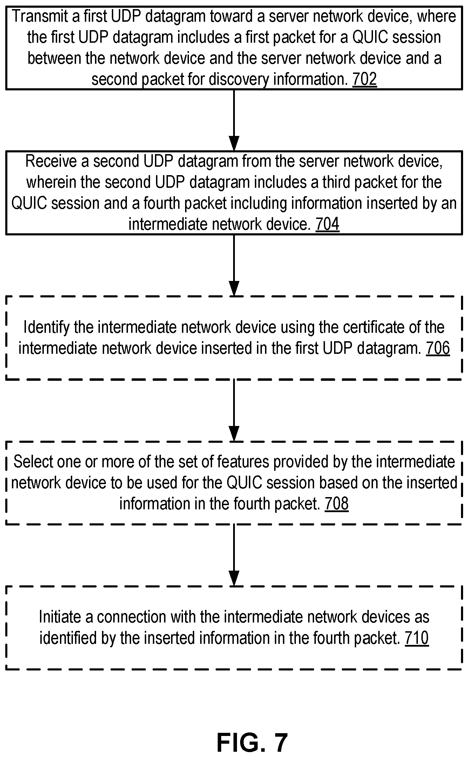

**Figure 7** is a flow diagram showing the operations of a network device implementing a client of a QUIC session for in-band signaling per one embodiment of the invention. The network device implements a client node/network device (client) discussed herein above in one embodiment.

At reference 702, the network device transmits a first UDP datagram toward a server network device, where the first UDP datagram includes a first packet for the QUIC session between the network device and a server network device and a second packet for discovery information. Note that the first and second packets may be ordered differently in different embodiments, and they may not be consecutive packets within the UDP datagrams.

At reference 704, the network device receives a second UDP datagram from the server network device, where the second UDP datagram includes a third packet for the QUIC session and a fourth packet including information inserted by the intermediate network device. The third packet may contain a server hello frame as discussed herein above. The network device may decrypt the packets included in the second UDP datagram and extract the inserted information.

Optionally at reference 706, the network device identifies the intermediate network device using the certificate of the intermediate network device inserted in the first UDP datagram.

Optionally at reference 708, the network device selects one or more of the set of performance enhancement features provided by the intermediate network device to be used for the QUIC session based on the inserted information in the fourth packet.

Optionally at reference 710, the network device initiates a connection with the intermediate network devices as identified by the inserted information in the fourth packet.

### Network Environments Under Which Embodiments of the Invention May Operate

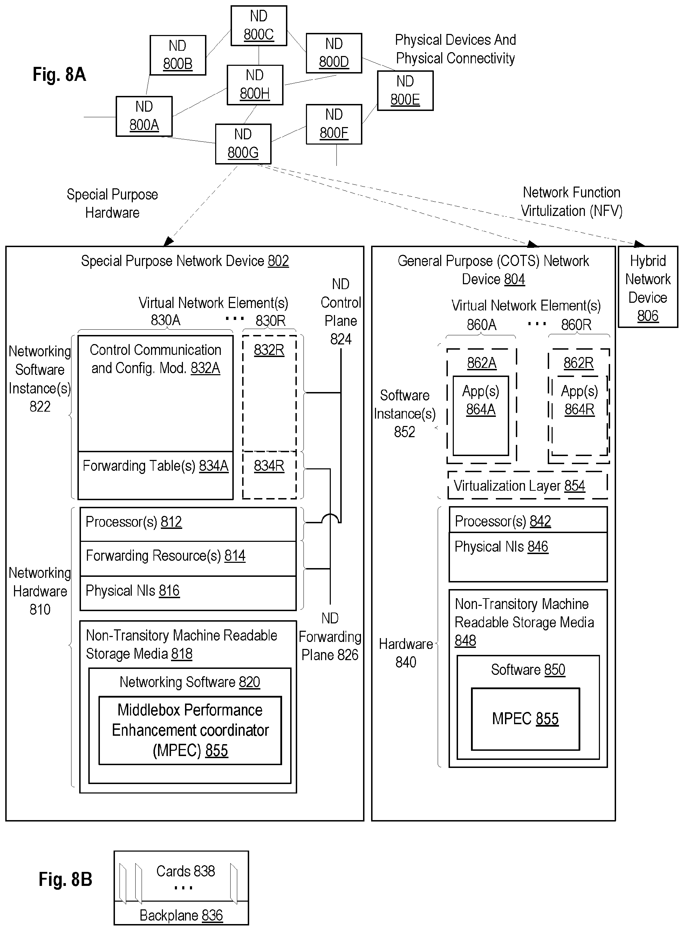

**Figure 8A** illustrates connectivity between network devices (NDs) within an exemplary network, as well as three exemplary implementations of the NDs, according to some embodiments of the invention. Figure 8A shows NDs 800A-H, and their connectivity by way of lines between 800A-800B, 800B-800C, 800C-800D, 800D-800E, 800E-800F, 800F-800G, and 800A-800G, as well as between 800H and each of 800A, 800C, 800D, and 800G. These NDs are physical devices, and the connectivity between these NDs can be wireless or wired (often referred to as a link). An additional line extending from NDs 800A, 800E, and 800F illustrates that these NDs act as ingress and egress points for the network (and thus, these NDs are sometimes referred to as edge NDs; while the other NDs may be called core NDs).

Two of the exemplary ND implementations in Figure 8A are: 1) a special-purpose network device 802 that uses custom application-specific integrated-circuits (ASICs) and a special-purpose operating system (OS); and 2) a general purpose network device 804 that uses common off-the-shelf (COTS) processors and a standard OS.

The special-purpose network device 802 includes networking hardware 810 comprising a set of one or more processor(s) 812, forwarding resource(s) 814 (which typically include one or more ASICs and/or network processors), and physical network interfaces (NIs) 816 (through which network connections are made, such as those shown by the connectivity between NDs 800A-H), as well as non-transitory machine readable storage media 818 having stored therein networking software 820. During operation, the networking software 820 may be executed by the networking hardware 810 to instantiate a set of one or more networking software instance(s) 822. Each of the networking software instance(s) 822, and that part of the networking hardware 810 that executes that network software instance (be it hardware dedicated to that networking software instance and/or time slices of hardware temporally shared by that networking software instance with others of the networking software instance(s) 822), form a separate virtual network element 830A-R. Each of the virtual network element(s) (VNEs) 830A-R includes a control communication and configuration module 832A-R (sometimes referred to as a local control module or control communication module) and forwarding table(s) 834A-R, such that a given virtual network element (e.g., 830A) includes the control communication and configuration module (e.g., 832A), a set of one or more forwarding table(s) (e.g., 834A), and that portion of the networking hardware 810 that executes the virtual network element (e.g., 830A). In one embodiment, the networking software 820 contains a middlebox performance enhancement coordinator (MPEC) 855. The middlebox performance enhancement coordinator 855 may perform operations as the sender, receiver, or COPE node in the operations described with reference to earlier figures. For example, when network device 802 serves as an intermediate network device on a path between a client network device and a server network device for a QUIC session, MPEC 855 performs operations relating to Figure 5; when it serves as the server network device, it performs operations relating to Figure 6; and when it serves as the source network device, it performs operations relating to Figure 7.

The special-purpose network device 802 is often physically and/or logically considered to include: 1) a ND control plane 824 (sometimes referred to as a control plane) comprising the processor(s) 812 that execute(s) the control communication and configuration module(s) 832A-R; and 2) a ND forwarding plane 826 (sometimes referred to as a forwarding plane, a data plane, or a media plane) comprising the forwarding resource(s) 814 that utilize the forwarding table(s) 834A-R and the physical NIs 816. By way of example, where the ND is a router (or is implementing routing functionality), the ND control plane 824 (the processor(s) 812 executing the control communication and configuration module(s) 832A-R) is typically responsible for participating in controlling how data (e.g., packets) is to be routed (e.g., the next hop for the data and the outgoing physical NI for that data) and storing that routing information in the forwarding table(s) 834A-R, and the ND forwarding plane 826 is responsible for receiving that data on the physical NIs 816 and forwarding that data out to the appropriate ones of the physical NIs 816 based on the forwarding table(s) 834A-R.

**Figure 8B** illustrates an exemplary way to implement the special-purpose network device 802 according to some embodiments of the invention. Figure 8B shows a special-purpose network device including cards 838 (typically hot pluggable). While in some embodiments the cards 838 are of two types (one or more that operate as the ND forwarding plane 826 (sometimes called line cards), and one or more that operate to implement the ND control plane 824 (sometimes called control cards)), alternative embodiments may combine functionality onto a single card and/or include additional card types (e.g., one additional type of card is called a service card, resource card, or multi-application card). A service card can provide specialized processing (e.g., Layer 4 to Layer 7 services (e.g., firewall, Internet Protocol Security (IPsec), Secure Sockets Layer (SSL) / Transport Layer Security (TLS), Intrusion Detection System (IDS), peer-to-peer (P2P), Voice over IP (VoIP) Session Border Controller, Mobile Wireless Gateways (Gateway General Packet Radio Service (GPRS) Support Node (GGSN), Evolved Packet Core (EPC) Gateway)). By way of example, a service card may be used to terminate IPsec tunnels and execute the attendant authentication and encryption algorithms. These cards are coupled together through one or more interconnect mechanisms illustrated as backplane 836 (e.g., a first full mesh coupling the line cards and a second full mesh coupling all of the cards).

Returning to Figure 8A, the general-purpose network device 804 includes hardware 840 comprising a set of one or more processor(s) 842 (which are often COTS processors) and physical NIs 846, as well as non-transitory machine-readable storage media 848 having stored therein software 850. During operation, the processor(s) 842 execute the software 850 to instantiate one or more sets of one or more applications 864A-R. While one embodiment does not implement virtualization, alternative embodiments may use different forms of virtualization. For example, in one such alternative embodiment the virtualization layer 854 represents the kernel of an operating system (or a shim executing on a base operating system) that allows for the creation of multiple instances 862A-R called software containers that may each be used to execute one (or more) of the sets of applications 864A-R; where the multiple software containers (also called virtualization engines, virtual private servers, or jails) are user spaces (typically a virtual memory space) that are separate from each other and separate from the kernel space in which the operating system is run; and where the set of applications running in a given user space, unless explicitly allowed, cannot access the memory of the other processes. In another such alternative embodiment the virtualization layer 854 represents a hypervisor (sometimes referred to as a virtual machine monitor (VMM)) or a hypervisor executing on top of a host operating system, and each of the sets of applications 864A-R is run on top of a guest operating system within an instance 862A-R called a virtual machine (which may in some cases be considered a tightly isolated form of software container) that is run on top of the hypervisor - the guest operating system and application may not know they are running on a virtual machine as opposed to running on a "bare metal" host electronic device, or through para-virtualization the operating system and/or application may be aware of the presence of virtualization for optimization purposes. In yet other alternative embodiments, one, some, or all of the applications are implemented as unikernel(s), which can be generated by compiling directly with an application only a limited set of libraries (e.g., from a library operating system (LibOS) including drivers/libraries of OS services) that provide the particular OS services needed by the application. As a unikernel can be implemented to run directly on hardware 840, directly on a hypervisor (in which case the unikernel is sometimes described as running within a LibOS virtual machine), or in a software container, embodiments can be implemented fully with unikernels running directly on a hypervisor represented by virtualization layer 854, unikernels running within software containers represented by instances 862A-R, or as a combination of unikernels and the above-described techniques (e.g., unikernels and virtual machines both run directly on a hypervisor, unikernels and sets of applications that are run in different software containers). Note that the networking software 850 includes a middlebox performance enhancement coordinator (MPEC) 855, whose operations are discussed herein relating to the network device 802.

The instantiation of the one or more sets of one or more applications 864A-R, as well as virtualization if implemented, are collectively referred to as software instance(s) 852. Each set of applications 864A-R, corresponding virtualization construct (e.g., instance 862A-R) if implemented, and that part of the hardware 840 that executes them (be it hardware dedicated to that execution and/or time slices of hardware temporally shared), forms a separate virtual network element(s) 860A-R.

The virtual network element(s) 860A-R perform similar functionality to the virtual network element(s) 830A-R - e.g., similar to the control communication and configuration module(s) 832A and forwarding table(s) 834A (this virtualization of the hardware 840 is sometimes referred to as network function virtualization (NFV)). Thus, NFV may be used to consolidate many network equipment types onto industry standard high-volume server hardware, physical switches, and physical storage, which could be located in Data centers, NDs, and customer premise equipment (CPE). While embodiments of the invention are illustrated with each instance 862A-R corresponding to one VNE 860A-R, alternative embodiments may implement this correspondence at a finer level granularity (e.g., line card virtual machines virtualize line cards, control card virtual machine virtualize control cards, etc.); it should be understood that the techniques described herein with reference to a correspondence of instances 862A-R to VNEs also apply to embodiments where such a finer level of granularity and/or unikernels are used.

**In** certain embodiments, the virtualization layer 854 includes a virtual switch that provides similar forwarding services as a physical Ethernet switch. Specifically, this virtual switch forwards traffic between instances 862A-R and the physical NI(s) 846, as well as optionally between the instances 862A-R; in addition, this virtual switch may enforce network isolation between the VNEs 860A-R that by policy are not permitted to communicate with each other (e.g., by honoring virtual local area networks (VLANs)).

The third exemplary ND implementation in Figure 8A is a hybrid network device 806, which includes both custom ASICs/special-purpose OS and COTS processors/standard OS in a single ND or a single card within an ND. In certain embodiments of such a hybrid network device, a platform VM (i.e., a VM that that implements the functionality of the special-purpose network device 802) could provide for para-virtualization to the networking hardware present in the hybrid network device 806.

Regardless of the above exemplary implementations of an ND, when a single one of multiple VNEs implemented by an ND is being considered (e.g., only one of the VNEs is part of a given virtual network) or where only a single VNE is currently being implemented by an ND, the shortened term network element (NE) is sometimes used to refer to that VNE. Also in all of the above exemplary implementations, each of the VNEs (e.g., VNE(s) 830A-R, VNEs 860A-R, and those in the hybrid network device 806) receives data on the physical NIs (e.g., 816, 846) and forwards that data out the appropriate ones of the physical NIs (e.g., 816, 846). For example, a VNE implementing IP router functionality forwards IP packets on the basis of some of the IP header information in the IP packet; where IP header information includes source IP address, destination IP address, source port, destination port (where "source port" and "destination port" refer herein to protocol ports, as opposed to physical ports of a ND), transport protocol (e.g., user datagram protocol (UDP), Transmission Control Protocol (TCP), and differentiated services code point (DSCP) values.

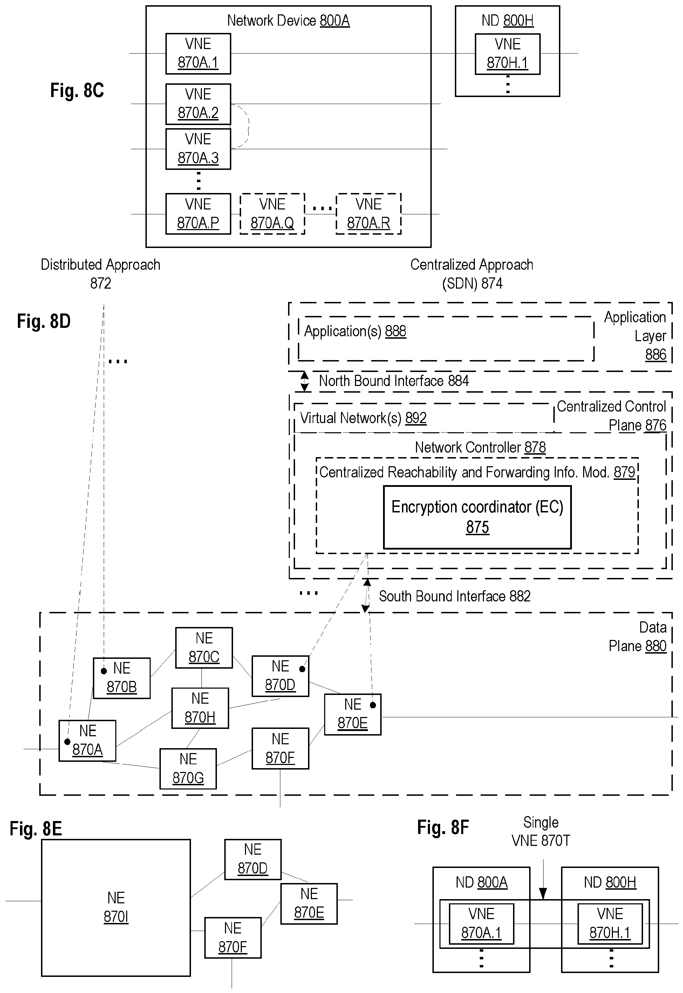

**Figure 8C** illustrates various exemplary ways in which VNEs may be coupled according to some embodiments of the invention. Figure 8C shows VNEs 870A.1-870A.P (and optionally VNEs 870A.Q-870A.R) implemented in ND 800A and VNE 870H.1 in ND 800H. In Figure 8C, VNEs 870A.1-P are separate from each other in the sense that they can receive packets from outside ND 800A and forward packets outside of ND 800A; VNE 870A.1 is coupled with VNE 870H.1, and thus they communicate packets between their respective NDs; VNE 870A.2-870A.3 may optionally forward packets between themselves without forwarding them outside of the ND 800A; and VNE 870A.P may optionally be the first in a chain of VNEs that includes VNE 870A.Q followed by VNE 870A.R (this is sometimes referred to as dynamic service chaining, where each of the VNEs in the series of VNEs provides a different service - e.g., one or more layer 4-7 network services). While Figure 8C illustrates various exemplary relationships between the VNEs, alternative embodiments may support other relationships (e.g., more/fewer VNEs, more/fewer dynamic service chains, multiple different dynamic service chains with some common VNEs and some different VNEs).

The NDs of Figure 8A, for example, may form part of the Internet or a private network; and other electronic devices (not shown; such as end user devices including workstations, laptops, netbooks, tablets, palm tops, mobile phones, smartphones, phablets, multimedia phones, Voice Over Internet Protocol (VOIP) phones, terminals, portable media players, GPS units, wearable devices, gaming systems, set-top boxes, Internet enabled household appliances) may be coupled to the network (directly or through other networks such as access networks) to communicate over the network (e.g., the Internet or virtual private networks (VPNs) overlaid on (e.g., tunneled through) the Internet) with each other (directly or through servers) and/or access content and/or services. Such content and/or services are typically provided by one or more servers (not shown) belonging to a service/content provider or one or more end user devices (not shown) participating in a peer-to-peer (P2P) service, and may include, for example, public webpages (e.g., free content, store fronts, search services), private webpages (e.g., username/password accessed webpages providing email services), and/or corporate networks over VPNs. For instance, end user devices may be coupled (e.g., through customer premise equipment coupled to an access network (wired or wirelessly)) to edge NDs, which are coupled (e.g., through one or more core NDs) to other edge NDs, which are coupled to electronic devices acting as servers. However, through compute and storage virtualization, one or more of the electronic devices operating as the NDs in Figure 8A may also host one or more such servers (e.g., in the case of the general purpose network device 804, one or more of the software instances 862A-R may operate as servers; the same would be true for the hybrid network device 806; in the case of the special-purpose network device 802, one or more such servers could also be run on a virtualization layer executed by the processor(s) 812); in which case the servers are said to be co-located with the VNEs of that ND.

A virtual network is a logical abstraction of a physical network (such as that in Figure 8A) that provides network services (e.g., L2 and/or L3 services). A virtual network can be implemented as an overlay network (sometimes referred to as a network virtualization overlay) that provides network services (e.g., layer 2 (L2, data link layer) and/or layer 3 (L3, network layer) services) over an underlay network (e.g., an L3 network, such as an Internet Protocol (IP) network that uses tunnels (e.g., generic routing encapsulation (GRE), layer 2 tunneling protocol (L2TP), IPSec) to create the overlay network).

A network virtualization edge (NVE) sits at the edge of the underlay network and participates in implementing the network virtualization; the network-facing side of the NVE uses the underlay network to tunnel frames to and from other NVEs; the outward-facing side of the NVE sends and receives data to and from systems outside the network. A virtual network instance (VNI) is a specific instance of a virtual network on a NVE (e.g., a NE/VNE on an ND, a part of a NE/VNE on a ND where that NE/VNE is divided into multiple VNEs through emulation); one or more VNIs can be instantiated on an NVE (e.g., as different VNEs on an ND). A virtual access point (VAP) is a logical connection point on the NVE for connecting external systems to a virtual network; a VAP can be physical or virtual ports identified through logical interface identifiers (e.g., a VLAN ID).

Examples of network services include: 1) an Ethernet LAN emulation service (an Ethernet-based multipoint service similar to an Internet Engineering Task Force (IETF) Multiprotocol Label Switching (MPLS) or Ethernet VPN (EVPN) service) in which external systems are interconnected across the network by a LAN environment over the underlay network (e.g., an NVE provides separate L2 VNIs (virtual switching instances) for different such virtual networks, and L3 (e.g., IP/MPLS) tunneling encapsulation across the underlay network); and 2) a virtualized IP forwarding service (similar to IETF IP VPN (e.g., Border Gateway Protocol (BGP)/MPLS IPVPN) from a service definition perspective) in which external systems are interconnected across the network by an L3 environment over the underlay network (e.g., an NVE provides separate L3 VNIs (forwarding and routing instances) for different such virtual networks, and L3 (e.g., IP/MPLS) tunneling encapsulation across the underlay network)). Network services may also include quality of service capabilities (e.g., traffic classification marking, traffic conditioning and scheduling), security capabilities (e.g., filters to protect customer premises from network - originated attacks, to avoid malformed route announcements), and management capabilities (e.g., full detection and processing).

**Figure 8D** illustrates a network with a single network element on each of the NDs of Figure 8A, and within this straight forward approach contrasts a traditional distributed approach (commonly used by traditional routers) with a centralized approach for maintaining reachability and forwarding information (also called network control), according to some embodiments of the invention. Specifically, Figure 8D illustrates network elements (NEs) 870A-H with the same connectivity as the NDs 800A-H of Figure 8A.

Figure 8D illustrates that the distributed approach 872 distributes responsibility for generating the reachability and forwarding information across the NEs 870A-H; in other words, the process of neighbor discovery and topology discovery is distributed.

For example, where the special-purpose network device 802 is used, the control communication and configuration module(s) 832A-R of the ND control plane 824 typically include a reachability and forwarding information module to implement one or more routing protocols (e.g., an exterior gateway protocol such as Border Gateway Protocol (BGP), Interior Gateway Protocol(s) (IGP) (e.g., Open Shortest Path First (OSPF), Intermediate System to Intermediate System (IS-IS), Routing Information Protocol (RIP), Label Distribution Protocol (LDP), Resource Reservation Protocol (RSVP) (including RSVP-Traffic Engineering (TE): Extensions to RSVP for LSP Tunnels and Generalized Multi-Protocol Label Switching (GMPLS) Signaling RSVP-TE)) that communicate with other NEs to exchange routes, and then selects those routes based on one or more routing metrics. Thus, the NEs 870A-H (e.g., the processor(s) 812 executing the control communication and configuration module(s) 832A-R) perform their responsibility for participating in controlling how data (e.g., packets) is to be routed (e.g., the next hop for the data and the outgoing physical NI for that data) by distributively determining the reachability within the network and calculating their respective forwarding information. Routes and adjacencies are stored in one or more routing structures (e.g., Routing Information Base (RIB), Label Information Base (LIB), one or more adjacency structures) on the ND control plane 824. The ND control plane 824 programs the ND forwarding plane 826 with information (e.g., adjacency and route information) based on the routing structure(s). For example, the ND control plane 824 programs the adjacency and route information into one or more forwarding table(s) 834A-R (e.g., Forwarding Information Base (FIB), Label Forwarding Information Base (LFIB), and one or more adjacency structures) on the ND forwarding plane 826. For layer 2 forwarding, the ND can store one or more bridging tables that are used to forward data based on the layer 2 information in that data. While the above example uses the special-purpose network device 802, the same distributed approach 872 can be implemented on the general-purpose network device 804 and the hybrid network device 806.

Figure 8D illustrates that a centralized approach 874 (also known as software defined networking (SDN)) that decouples the system that makes decisions about where traffic is sent from the underlying systems that forwards traffic to the selected destination. The illustrated centralized approach 874 has the responsibility for the generation of reachability and forwarding information in a centralized control plane 876 (sometimes referred to as a SDN control module, controller, network controller, OpenFlow controller, SDN controller, control plane node, network virtualization authority, or management control entity), and thus the process of neighbor discovery and topology discovery is centralized. The centralized control plane 876 has a south bound interface 882 with a data plane 880 (sometime referred to the infrastructure layer, network forwarding plane, or forwarding plane (which should not be confused with a ND forwarding plane)) that includes the NEs 870A-H (sometimes referred to as switches, forwarding elements, data plane elements, or nodes). The centralized control plane 876 includes a network controller 878, which includes a centralized reachability and forwarding information module 879 that determines the reachability within the network and distributes the forwarding information to the NEs 870A-H of the data plane 880 over the south bound interface 882 (which may use the OpenFlow protocol). Thus, the network intelligence is centralized in the centralized control plane 876 executing on electronic devices that are typically separate from the NDs. In one embodiment, centralized reachability and forwarding information module 879 includes an encryption coordinator 875, which may coordinate the acquisition of the keying materials (e.g., keys and cipher algorithms) necessary to secure the communication between an intermediate network device and an endpoint (client or server) network device as discussed herein above.

For example, where the special-purpose network device 802 is used in the data plane 880, each of the control communication and configuration module(s) 832A-R of the ND control plane 824 typically include a control agent that provides the VNE side of the south bound interface 882. In this case, the ND control plane 824 (the processor(s) 812 executing the control communication and configuration module(s) 832A-R) performs its responsibility for participating in controlling how data (e.g., packets) is to be routed (e.g., the next hop for the data and the outgoing physical NI for that data) through the control agent communicating with the centralized control plane 876 to receive the forwarding information (and in some cases, the reachability information) from the centralized reachability and forwarding information module 879 (it should be understood that in some embodiments of the invention, the control communication and configuration module(s) 832A-R, in addition to communicating with the centralized control plane 876, may also play some role in determining reachability and/or calculating forwarding information - albeit less so than in the case of a distributed approach; such embodiments are generally considered to fall under the centralized approach 874 but may also be considered a hybrid approach).

While the above example uses the special-purpose network device 802, the same centralized approach 874 can be implemented with the general purpose network device 804 (e.g., each of the VNE 860A-R performs its responsibility for controlling how data (e.g., packets) is to be routed (e.g., the next hop for the data and the outgoing physical NI for that data) by communicating with the centralized control plane 876 to receive the forwarding information (and in some cases, the reachability information) from the centralized reachability and forwarding information module 879; it should be understood that in some embodiments of the invention, the VNEs 860A-R, in addition to communicating with the centralized control plane 876, may also play some role in determining reachability and/or calculating forwarding information - albeit less so than in the case of a distributed approach) and the hybrid network device 806. In fact, the use of SDN techniques can enhance the NFV techniques typically used in the general purpose network device 804 or hybrid network device 806 implementations as NFV is able to support SDN by providing an infrastructure upon which the SDN software can be run, and NFV and SDN both aim to make use of commodity server hardware and physical switches.

Figure 8D also shows that the centralized control plane 876 has a north bound interface 884 to an application layer 886, in which resides application(s) 888. The centralized control plane 876 has the ability to form virtual networks 892 (sometimes referred to as a logical forwarding plane, network services, or overlay networks (with the NEs 870A-H of the data plane 880 being the underlay network)) for the application(s) 888. Thus, the centralized control plane 876 maintains a global view of all NDs and configured NEs/VNEs, and it maps the virtual networks to the underlying NDs efficiently (including maintaining these mappings as the physical network changes either through hardware (ND, link, or ND component) failure, addition, or removal).

While Figure 8D shows the distributed approach 872 separate from the centralized approach 874, the effort of network control may be distributed differently or the two combined in certain embodiments of the invention. For example: 1) embodiments may generally use the centralized approach (SDN) 874, but have certain functions delegated to the NEs (e.g., the distributed approach may be used to implement one or more of fault monitoring, performance monitoring, protection switching, and primitives for neighbor and/or topology discovery); or 2) embodiments of the invention may perform neighbor discovery and topology discovery via both the centralized control plane and the distributed protocols, and the results compared to raise exceptions where they do not agree. Such embodiments are generally considered to fall under the centralized approach 874 but may also be considered a hybrid approach.

While Figure 8D illustrates the simple case where each of the NDs 800A-H implements a single NE 870A-H, it should be understood that the network control approaches described with reference to Figure 8D also work for networks where one or more of the NDs 800A-H implement multiple VNEs (e.g., VNEs 830A-R, VNEs 860A-R, those in the hybrid network device 806). Alternatively, or in addition, the network controller 878 may also emulate the implementation of multiple VNEs in a single ND. Specifically, instead of (or in addition to) implementing multiple VNEs in a single ND, the network controller 878 may present the implementation of a VNE/NE in a single ND as multiple VNEs in the virtual networks 892 (all in the same one of the virtual network(s) 892, each in different ones of the virtual network(s) 892, or some combination). For example, the network controller 878 may cause an ND to implement a single VNE (a NE) in the underlay network, and then logically divide up the resources of that NE within the centralized control plane 876 to present different VNEs in the virtual network(s) 892 (where these different VNEs in the overlay networks are sharing the resources of the single VNE/NE implementation on the ND in the underlay network).

On the other hand, **Figures 8E and 8F** respectively illustrate exemplary abstractions of NEs and VNEs that the network controller 878 may present as part of different ones of the virtual networks 892. Figure 8E illustrates the simple case of where each of the NDs 800A-H implements a single NE 870A-H (see Figure 8D), but the centralized control plane 876 has abstracted multiple of the NEs in different NDs (the NEs 870A-C and G-H) into (to represent) a single NE 870I in one of the virtual network(s) 892 of Figure 8D, according to some embodiments of the invention. Figure 8E shows that in this virtual network, the NE 870I is coupled to NE 870D and 870F, which are both still coupled to NE 870E.

Figure 8F illustrates a case where multiple VNEs (VNE 870A.1 and VNE 870H.1) are implemented on different NDs (ND 800A and ND 800H) and are coupled to each other, and where the centralized control plane 876 has abstracted these multiple VNEs such that they appear as a single VNE 870T within one of the virtual networks 892 of Figure 8D, according to some embodiments of the invention. Thus, the abstraction of a NE or VNE can span multiple NDs.

While some embodiments of the invention implement the centralized control plane 876 as a single entity (e.g., a single instance of software running on a single electronic device), alternative embodiments may spread the functionality across multiple entities for redundancy and/or scalability purposes (e.g., multiple instances of software running on different electronic devices).

Similar to the network device implementations, the electronic device(s) running the centralized control plane 876, and thus the network controller 878 including the centralized reachability and forwarding information module 879, may be implemented in a variety of ways (e.g., a special purpose device, a general-purpose (e.g., COTS) device, or hybrid device). These electronic device(s) would similarly include processor(s), a set or one or more physical NIs, and a non-transitory machine-readable storage medium having stored thereon the centralized control plane software.

Standards such as OpenFlow define the protocols used for the messages, as well as a model for processing the packets. The model for processing packets includes header parsing, packet classification, and making forwarding decisions. Header parsing describes how to interpret a packet based upon a well-known set of protocols. Some protocol fields are used to build a match structure (or key) that will be used in packet classification (e.g., a first key field could be a source media access control (MAC) address, and a second key field could be a destination MAC address).

Packet classification involves executing a lookup in memory to classify the packet by determining which entry (also referred to as a forwarding table entry or flow entry) in the forwarding tables best matches the packet based upon the match structure, or key, of the forwarding table entries. It is possible that many flows represented in the forwarding table entries can correspond/match to a packet; in this case the system is typically configured to determine one forwarding table entry from the many according to a defined scheme (e.g., selecting a first forwarding table entry that is matched). Forwarding table entries include both a specific set of match criteria (a set of values or wildcards, or an indication of what portions of a packet should be compared to a particular value/values/wildcards, as defined by the matching capabilities - for specific fields in the packet header, or for some other packet content), and a set of one or more actions for the data plane to take on receiving a matching packet. For example, an action may be to push a header onto the packet, for the packet using a particular port, flood the packet, or simply drop the packet. Thus, a forwarding table entry for IPv4/IPv6 packets with a particular transmission control protocol (TCP) destination port could contain an action specifying that these packets should be dropped.

Making forwarding decisions and performing actions occurs, based upon the forwarding table entry identified during packet classification, by executing the set of actions identified in the matched forwarding table entry on the packet.

However, when an unknown packet (for example, a "missed packet" or a "match-miss" as used in OpenFlow parlance) arrives at the data plane 880, the packet (or a subset of the packet header and content) is typically forwarded to the centralized control plane 876. The centralized control plane 876 will then program forwarding table entries into the data plane 880 to accommodate packets belonging to the flow of the unknown packet. Once a specific forwarding table entry has been programmed into the data plane 880 by the centralized control plane 876, the next packet with matching credentials will match that forwarding table entry and take the set of actions associated with that matched entry.

A network interface (NI) may be physical or virtual; and in the context of IP, an interface address is an IP address assigned to a NI, be it a physical NI or virtual NI. A virtual NI may be associated with a physical NI, with another virtual interface, or stand on its own (e.g., a loopback interface, a point-to-point protocol interface). A NI (physical or virtual) may be numbered (a NI with an IP address) or unnumbered (a NI without an IP address). A loopback interface (and its loopback address) is a specific type of virtual NI (and IP address) of a NE/VNE (physical or virtual) often used for management purposes; where such an IP address is referred to as the nodal loopback address. The IP address(es) assigned to the NI(s) of a ND are referred to as IP addresses of that ND; at a more granular level, the IP address(es) assigned to NI(s) assigned to a NE/VNE implemented on a ND can be referred to as IP addresses of that NE/VNE.

Next hop selection by the routing system for a given destination may resolve to one path (that is, a routing protocol may generate one next hop on a shortest path); but if the routing system determines there are multiple viable next hops (that is, the routing protocol generated forwarding solution offers more than one next hop on a shortest path - multiple equal cost next hops), some additional criteria is used - for instance, in a connectionless network, Equal Cost Multi Path (ECMP) (also known as Equal Cost Multi Pathing, multipath forwarding and IP multipath) may be used (e.g., typical implementations use as the criteria particular header fields to ensure that the packets of a particular packet flow are always forwarded on the same next hop to preserve packet flow ordering). For purposes of multipath forwarding, a packet flow is defined as a set of packets that share an ordering constraint. As an example, the set of packets in a particular TCP transfer sequence need to arrive in order, else the TCP logic will interpret the out of order delivery as congestion and slow the TCP transfer rate down.

A Layer 3 (L3) Link Aggregation (LAG) link is a link directly connecting two NDs with multiple IP-addressed link paths (each link path is assigned a different IP address), and a load distribution decision across these different link paths is performed at the ND forwarding plane; in which case, a load distribution decision is made between the link paths.

Some NDs include functionality for authentication, authorization, and accounting (AAA) protocols (e.g., RADIUS (Remote Authentication Dial-In User Service), Diameter, and/or TACACS+ (Terminal Access Controller Access Control System Plus). AAA can be provided through a client/server model, where the AAA client is implemented on a ND and the AAA server can be implemented either locally on the ND or on a remote electronic device coupled with the ND. Authentication is the process of identifying and verifying a subscriber. For instance, a subscriber might be identified by a combination of a username and a password or through a unique key. Authorization determines what a subscriber can do after being authenticated, such as gaining access to certain electronic device information resources (e.g., through the use of access control policies). Accounting is recording user activity. By way of a summary example, end user devices may be coupled (e.g., through an access network) through an edge ND (supporting AAA processing) coupled to core NDs coupled to electronic devices implementing servers of service/content providers. AAA processing is performed to identify for a subscriber the subscriber record stored in the AAA server for that subscriber. A subscriber record includes a set of attributes (e.g., subscriber name, password, authentication information, access control information, rate-limiting information, policing information) used during processing of that subscriber's traffic.

Certain NDs (e.g., certain edge NDs) internally represent end user devices (or sometimes customer premise equipment (CPE) such as a residential gateway (e.g., a router, modem)) using subscriber circuits. A subscriber circuit uniquely identifies within the ND a subscriber session and typically exists for the lifetime of the session. Thus, a ND typically allocates a subscriber circuit when the subscriber connects to that ND, and correspondingly de-allocates that subscriber circuit when that subscriber disconnects. Each subscriber session represents a distinguishable flow of packets communicated between the ND and an end user device (or sometimes CPE such as a residential gateway or modem) using a protocol, such as the point-to-point protocol over another protocol (PPPoX) (e.g., where X is Ethernet or Asynchronous Transfer Mode (ATM)), Ethernet, 802.1Q Virtual LAN (VLAN), Internet Protocol, or ATM). A subscriber session can be initiated using a variety of mechanisms (e.g., manual provisioning a dynamic host configuration protocol (DHCP), DHCP/client-less internet protocol service (CLIPS) or Media Access Control (MAC) address tracking). For example, the point-to-point protocol (PPP) is commonly used for digital subscriber line (DSL) services and requires installation of a PPP client that enables the subscriber to enter a username and a password, which in turn may be used to select a subscriber record. When DHCP is used (e.g., for cable modem services), a username typically is not provided; but in such situations other information (e.g., information that includes the MAC address of the hardware in the end user device (or CPE)) is provided. The use of DHCP and CLIPS on the ND captures the MAC addresses and uses these addresses to distinguish subscribers and access their subscriber records.

A virtual circuit (VC), synonymous with virtual connection and virtual channel, is a connection-oriented communication service that is delivered by means of packet mode communication. Virtual circuit communication resembles circuit switching, since both are connection oriented, meaning that in both cases data is delivered in correct order, and signaling overhead is required during a connection establishment phase. Virtual circuits may exist at different layers. For example, at layer 4, a connection-oriented transport layer datalink protocol such as Transmission Control Protocol (TCP) may rely on a connectionless packet switching network layer protocol such as IP, where different packets may be routed over different paths, and thus be delivered out of order. Where a reliable virtual circuit is established with TCP on top of the underlying unreliable and connectionless IP protocol, the virtual circuit is identified by the source and destination network socket address pair, i.e., the sender and receiver IP address and port number. However, a virtual circuit is possible since TCP includes segment numbering and reordering on the receiver side to prevent out-of-order delivery. Virtual circuits are also possible at Layer 3 (network layer) and Layer 2 (datalink layer); such virtual circuit protocols are based on connection-oriented packet switching, meaning that data is always delivered along the same network path, i.e., through the same NEs/VNEs. In such protocols, the packets are not routed individually and complete addressing information is not provided in the header of each data packet; only a small virtual channel identifier (VCI) is required in each packet; and routing information is transferred to the NEs/VNEs during the connection establishment phase; switching only involves looking up the virtual channel identifier in a table rather than analyzing a complete address. Examples of network layer and datalink layer virtual circuit protocols, where data always is delivered over the same path: X.25, where the VC is identified by a virtual channel identifier (VCI); Frame relay, where the VC is identified by a VCI; Asynchronous Transfer Mode (ATM), where the circuit is identified by a virtual path identifier (VPI) and virtual channel identifier (VCI) pair; General Packet Radio Service (GPRS); and Multiprotocol label switching (MPLS), which can be used for IP over virtual circuits (Each circuit is identified by a label).

Certain NDs (e.g., certain edge NDs) use a hierarchy of circuits. The leaf nodes of the hierarchy of circuits are subscriber circuits. The subscriber circuits have parent circuits in the hierarchy that typically represent aggregations of multiple subscriber circuits, and thus the network segments and elements used to provide access network connectivity of those end user devices to the ND. These parent circuits may represent physical or logical aggregations of subscriber circuits (e.g., a virtual local area network (VLAN), a permanent virtual circuit (PVC) (e.g., for Asynchronous Transfer Mode (ATM)), a circuit-group, a channel, a pseudo-wire, a physical NI of the ND, and a link aggregation group). A circuit-group is a virtual construct that allows various sets of circuits to be grouped together for configuration purposes; for example, aggregate rate control. A pseudo-wire is an emulation of a layer 2 point-to-point connection-oriented service. A link aggregation group is a virtual construct that merges multiple physical NIs for purposes of bandwidth aggregation and redundancy. Thus, the parent circuits physically or logically encapsulate the subscriber circuits.

Each VNE (e.g., a virtual router, a virtual bridge (which may act as a virtual switch instance in a Virtual Private LAN Service (VPLS)) is typically independently administrable. For example, in the case of multiple virtual routers, each of the virtual routers may share system resources but is separate from the other virtual routers regarding its management domain, AAA (authentication, authorization, and accounting) name space, IP address, and routing database(s). Multiple VNEs may be employed in an edge ND to provide direct network access and/or different classes of services for subscribers of service and/or content providers.

Within certain NDs, "interfaces" that are independent of physical NIs may be configured as part of the VNEs to provide higher-layer protocol and service information (e.g., Layer 3 addressing). The subscriber records in the AAA server identify, in addition to the other subscriber configuration requirements, to which context (e.g., which of the VNEs/NEs) the corresponding subscribers should be bound within the ND. As used herein, a binding forms an association between a physical entity (e.g., physical NI, channel) or a logical entity (e.g., circuit such as a subscriber circuit or logical circuit (a set of one or more subscriber circuits)) and a context's interface over which network protocols (e.g., routing protocols, bridging protocols) are configured for that context. Subscriber data flows on the physical entity when some higher-layer protocol interface is configured and associated with that physical entity.

## Claims

1. A method performed by a network device that is on a path between a client network device and a server network device, the method comprising:
receiving (502) a first packet within a User Datagram Protocol, UDP, datagram, wherein the first packet is an initial packet for a QUIC session between the client and server network devices and the UDP datagram is within an Internet Protocol, IP, packet;
detecting whether a second packet for discovery information exists in the received IP packet, wherein:
if no second packet exists in the received IP packet, the method comprises:
creating a second packet, and
inserting (504) discovery information into the created second packet within the IP packet, and
if a second packet does exist in the received IP packet, the method comprises:
inserting the discovery information into the existing second packet within the IP packet, and wherein the discovery information includes a set of features supported by the network device; and
transmitting (506) the IP packet after the inserting based on destination of the IP packet.

2. The method of claim 1, wherein the set of features includes one or more of a congestion control enhancement, a split or domain specific congestion control, traffic exposure, and a link to a more detailed set of features list.

3. The method of claim 1 or 2, wherein the discovery information includes identity of the network device.

4. The method of claim 3, wherein the identity of the network device includes one or more of its global identifier or common name, its node certificate, and its IP address.

5. The method of claim 1 or 2, wherein the first packet is sourced from the client network device for the QUIC session, and wherein the first packet contains a client hello frame.

6. The method of claim 1 or 2, wherein the first packet is sourced from the server network device for the QUIC session, and wherein the first packet contains a server hello frame.

7. The method of claim 1 or 2, wherein the first and second packets are included in a same UDP payload.

8. The method of claim 1 or 2, wherein the discovery information is encrypted, and wherein the encryption uses a public key of the source network device.

9. The method of claim 8, wherein the network device obtains keying materials for the encryption from the client or server network device.

10. The method of claim 1 or 2, wherein the discovery information has a digital signature added by the network device inserting the discovery information.

11. A network device (802, 804), comprising:
a processor (812, 842) and non-transitory computer-readable storage medium (818, 848) that provides instructions that, when executed by the processor, cause the network device to perform:
receiving (502) a first packet within a User Datagram Protocol, UDP, datagram, wherein the first packet is an initial packet for a QUIC session between a client network device and a server network device and the UDP datagram is within an Internet Protocol, IP, packet;
detecting whether a second packet for discovery information exists in the received IP packet, wherein:
if no second packet exists in the received IP packet, the method comprises:
creating a second packet, and
inserting (504) discovery information into the created second packet within the IP packet, and
if a second packet does exist in the received IP packet, the method comprises:
inserting the discovery information into the existing second packet within the IP packet, and wherein the discovery information includes a set of features supported by the network device; and
transmitting (506) the IP packet after the inserting based on destination of the IP packet.

12. The network device of claim 11, wherein the set of features includes one or more of a congestion control enhancement, a split or domain specific congestion control, traffic exposure, and a link to a more detailed set of features list.

13. The network device of claim 11 or 12, wherein the discovery information includes identity of the network device.

14. The network device of claim 13, wherein the identity of the network device includes one or more of its global identifier or common name, its node certificate, and its IP address.

15. A non-transitory computer-readable storage medium (818, 848) that provides instructions that, when executed, cause a network device to perform:
receiving (502) a first packet within a User Datagram Protocol, UDP, datagram, wherein the first packet is an initial packet for a QUIC session between a client network device and a server network device and the UDP datagram is within an Internet Protocol, IP, packet;
detecting whether a second packet for discovery information exists in the received IP packet, wherein:
if no second packet exists in the received IP packet, the method comprises:
creating a second packet, and
inserting (504) discovery information into the created second packet within the IP packet, and
if a second packet does exist in the received IP packet, the method comprises:
inserting the discovery information into the existing second packet within the IP packet, and wherein the discovery information includes a set of features supported by the network device; and
transmitting (506) the IP packet after the inserting based on destination of the IP packet.

## Patentansprüche

1. Verfahren, das von einer Netzwerkvorrichtung durchgeführt wird, die sich auf einem Pfad zwischen einer Client-Netzwerkvorrichtung und einer Server-Netzwerkvorrichtung befindet, wobei das Verfahren Folgendes umfasst:
Empfangen (502) eines ersten Pakets innerhalb eines Datagramms eines Benutzer-Datagrammprotokolls, UDP, wobei das erste Paket ein Anfangspaket für eine QUIC-Sitzung zwischen der Client- und der Server-Netzwerkvorrichtung ist und das UDP-Datagramm sich innerhalb eines Internetprotokollpakets, IP-Pakets, befindet;
Erfassen, ob ein zweites Paket für Erkennungsinformationen in dem empfangenen IP-Paket vorhanden ist,
wobei:
das Verfahren, wenn kein zweites Paket in dem empfangenen IP-Paket vorhanden ist, Folgendes umfasst:
Erstellen eines zweiten Pakets; und
Einfügen (504) von Erkennungsinformationen in das erstellte zweite Paket innerhalb des IP-Pakets; und
das Verfahren, wenn ein zweites Paket in dem empfangenen IP-Paket vorhanden ist, Folgendes umfasst:
Einfügen der Erkennungsinformationen in das vorhandene zweite Paket innerhalb des IP-Pakets, und wobei die Erkennungsinformationen einen Satz von Merkmalen umfassen, der von der Netzwerkvorrichtung unterstützt wird; und
Senden (506) des IP-Pakets nach dem Einfügen basierend auf dem Ziel des IP-Pakets.

2. Verfahren nach Anspruch 1, wobei der Satz von Merkmalen eines oder mehrere von einer Überlaststeuerungsverbesserung, einer geteilten oder domänenspezifischen Überlaststeuerung, einer Verkehrsbelastung und einem Link zu einem detaillierteren Merkmalslistensatz umfasst.

3. Verfahren nach Anspruch 1 oder 2, wobei die Erkennungsinformationen eine Identität der Netzwerkvorrichtung umfassen.

4. Verfahren nach Anspruch 3, wobei die Identität der Netzwerkvorrichtung eines oder mehrere von ihrer globalen Kennung oder ihrem allgemeinen Namen, ihrem Knotenzertifikat und ihrem IP-Adresse umfasst.

5. Verfahren nach Anspruch 1 oder 2, wobei das erste Paket von der Client-Netzwerkvorrichtung für die QUIC-Sitzung bezogen wird und wobei das erste Paket einen Client-Hello-Rahmen enthält.

6. Verfahren nach Anspruch 1 oder 2, wobei das erste Paket von der Server-Netzwerkvorrichtung für die QUIC-Sitzung bezogen wird und wobei das erste Paket einen Sever-Hello-Rahmen enthält.

7. Verfahren nach Anspruch 1 oder 2, wobei das erste und das zweite Paket in derselben UDP-Nutzlast umfasst sind.

8. Verfahren nach Anspruch 1 oder 2, wobei die Erkennungsinformationen verschlüsselt sind und wobei die Verschlüsselung einen öffentlichen Schlüssel der Quellnetzwerkvorrichtung verwendet.

9. Verfahren nach Anspruch 8, wobei die Netzwerkvorrichtung Schlüsselmaterialien zur Verschlüsselung von der Client- oder der Server-Netzwerkvorrichtung erhält.

10. Verfahren nach Anspruch 1 oder 2, wobei die Erkennungsinformationen eine digitale Signatur aufweisen, die von der Netzwerkvorrichtung, die die Erkennungsinformationen einfügt, hinzugefügt wird.

11. Netzwerkvorrichtung (802, 804), umfassend:
einen Prozessor (812, 842) und ein nichtflüchtiges computerlesbares Speichermedium (818, 848), das Anweisungen bereitstellt, die bei Ausführung durch den Prozessor die Netzwerkvorrichtung veranlassen, Folgendes durchzuführen:
Empfangen (502) eines ersten Pakets innerhalb eines Datagramms eines Benutzer-Datagrammprotokolls, UDP, wobei das erste Paket ein Anfangspaket für eine QUIC-Sitzung zwischen einer Client-Netzwerkvorrichtung und einer Server-Netzwerkvorrichtung ist und das UDP-Datagramm sich innerhalb eines Internetprotokollpakets, IP-Pakets, befindet;
Erfassen, ob ein zweites Paket für Erkennungsinformationen in dem empfangenen IP-Paket vorhanden ist, wobei:
das Verfahren, wenn kein zweites Paket in dem empfangenen IP-Paket vorhanden ist, Folgendes umfasst:
Erstellen eines zweiten Pakets; und
Einfügen (504) von Erkennungsinformationen in das erstellte zweite Paket innerhalb des IP-Pakets; und
das Verfahren, wenn ein zweites Paket in dem empfangenen IP-Paket vorhanden ist, Folgendes umfasst:
Einfügen der Erkennungsinformationen in das vorhandene zweite Paket innerhalb des IP-Pakets, und wobei die Erkennungsinformationen einen Satz von Merkmalen umfassen, der von der Netzwerkvorrichtung unterstützt wird; und
Senden (506) des IP-Pakets nach dem Einfügen basierend auf dem Ziel des IP-Pakets.

12. Netzwerkvorrichtung nach Anspruch 11, wobei der Satz von Merkmalen eines oder mehrere von einer Überlaststeuerungsverbesserung, einer geteilten oder domänenspezifischen Überlaststeuerung, einer Verkehrsbelastung und einem Link zu einem detaillierteren Merkmalslistensatz umfasst.

13. Netzwerkvorrichtung nach Anspruch 11 oder 12, wobei die Erkennungsinformationen eine Identität der Netzwerkvorrichtung umfassen.

14. Netzwerkvorrichtung nach Anspruch 13, wobei die Identität der Netzwerkvorrichtung eines oder mehrere von ihrer globalen Kennung oder ihrem allgemeinen Namen, ihrem Knotenzertifikat und ihrem IP-Adresse umfasst.

15. Nichtflüchtiges computerlesbares Speichermedium (818, 848), das Anweisungen bereitstellt, die bei Ausführung eine Netzwerkvorrichtung veranlassen, Folgendes durchzuführen:
Empfangen (502) eines ersten Pakets innerhalb eines Datagramms eines Benutzer-Datagrammprotokolls, UDP, wobei das erste Paket ein Anfangspaket für eine QUIC-Sitzung zwischen einer Client-Netzwerkvorrichtung und einer Server-Netzwerkvorrichtung ist und das UDP-Datagramm innerhalb eines Internetprotokollpakets, IP-Pakets, befindet;
Erfassen, ob ein zweites Paket für Erkennungsinformationen in dem empfangenen IP-Paket vorhanden ist, wobei:
das Verfahren, wenn kein zweites Paket in dem empfangenen IP-Paket vorhanden ist, Folgendes umfasst:
Erstellen eines zweiten Pakets; und
Einfügen (504) von Erkennungsinformationen in das erstellte zweite Paket innerhalb des IP-Pakets; und
das Verfahren, wenn ein zweites Paket in dem empfangenen IP-Paket vorhanden ist, Folgendes umfasst:
Einfügen der Erkennungsinformationen in das vorhandene zweite Paket innerhalb des IP-Pakets, und wobei die Erkennungsinformationen einen Satz von Merkmalen umfassen, der von der Netzwerkvorrichtung unterstützt wird; und
Senden (506) des IP-Pakets nach dem Einfügen basierend auf dem Ziel des IP-Pakets.

## Revendications

1. Procédé réalisé par un dispositif de réseau qui se trouve sur un trajet entre un dispositif de réseau client et un dispositif de réseau serveur, le procédé comprenant :
la réception (502) d'un premier paquet à l'intérieur d'un datagramme de protocole de datagramme utilisateur, UDP, dans lequel le premier paquet est un paquet initial pour une session QUIC entre le dispositif de réseau client et le dispositif de réseau serveur et le datagramme UDP se trouve à l'intérieur d'un paquet de protocole Internet, IP ;
la détection s'il existe ou non un deuxième paquet d'informations de découverte dans le paquet IP reçu, dans lequel :
s'il n'existe pas de deuxième paquet dans le paquet IP reçu, le procédé comprend :
la création d'un deuxième paquet, et
l'insertion (504) d'informations de découverte dans le deuxième paquet créé à l'intérieur du paquet IP, et
s'il existe un deuxième paquet dans le paquet IP reçu, le procédé comprend :
l'insertion des informations de découverte dans le deuxième paquet existant à l'intérieur du paquet IP, et dans lequel les informations de découverte comprennent un ensemble de caractéristiques prises en charge par le dispositif de réseau ; et
la transmission (506) du paquet IP après l'insertion sur la base d'une destination du paquet IP.

2. Procédé selon la revendication 1, dans lequel l'ensemble de caractéristiques comprend une ou plusieurs parmi une amélioration de commande de congestion, une commande de congestion spécifique au domaine ou divisée, une exposition de trafic, et une liaison à une liste plus détaillée d'un ensemble de caractéristiques.

3. Procédé selon la revendication 1 ou **2,** dans lequel les informations de découverte comprennent une identité du dispositif de réseau.

4. Procédé selon la revendication 3, dans lequel l'identité du dispositif de réseau comprend un ou plusieurs parmi son identifiant mondial ou son nom commun, son certificat de nœud, et son adresse IP.

5. Procédé selon la revendication 1 ou 2, dans lequel le premier paquet provient du dispositif de réseau client pour la session QUIC, et dans lequel le premier paquet contient une trame client hello.

6. Procédé selon la revendication 1 ou 2, dans lequel le premier paquet provient du dispositif de réseau serveur pour la session QUIC, et dans lequel le premier paquet contient une trame server hello.

7. Procédé selon la revendication 1 ou 2, dans lequel les premier et deuxième paquets sont inclus dans une même charge utile UDP.

8. Procédé selon la revendication 1 ou 2, dans lequel les informations de découverte sont chiffrées, et dans lequel le chiffrement utilise une clé publique du dispositif de réseau source.

9. Procédé selon la revendication 8, dans lequel le dispositif de réseau obtient des éléments de codage pour le chiffrement à partir du dispositif de réseau client ou du dispositif de réseau serveur.

10. Procédé selon la revendication 1 ou 2, dans lequel les informations de découverte présentent une signature numérique ajoutée par le dispositif de réseau insérant les informations de découverte.

11. Dispositif de réseau (802, 804), comprenant :
un processeur (812, 842) et un support de stockage non transitoire lisible par ordinateur (818, 848) qui fournit des instructions qui, lorsqu'elles sont exécutées par le processeur, amènent le dispositif de réseau à réaliser :
la réception (502) d'un premier paquet à l'intérieur d'un datagramme de protocole de datagramme utilisateur, UDP, dans lequel le premier paquet est un paquet initial pour une session QUIC entre un dispositif de réseau client et un dispositif de réseau serveur et le datagramme UDP se trouve à l'intérieur d'un paquet de protocole Internet, IP ;
la détection s'il existe ou non un deuxième paquet d'informations de découverte dans le paquet IP reçu, dans lequel :
s'il n'existe pas de deuxième paquet dans le paquet IP reçu, le procédé comprend :
la création d'un deuxième paquet, et
l'insertion (504) d'informations de découverte dans le deuxième paquet créé à l'intérieur du paquet IP, et
s'il existe un deuxième paquet dans le paquet IP reçu, le procédé comprend :
l'insertion des informations de découverte dans le deuxième paquet existant à l'intérieur du paquet IP, et dans lequel les informations de découverte comprennent un ensemble de caractéristiques prises en charge par le dispositif de réseau ; et
la transmission (506) du paquet IP après l'insertion sur la base d'une destination du paquet IP.

12. Dispositif de réseau selon la revendication 11, dans lequel l'ensemble de caractéristiques comprend une ou plusieurs parmi une amélioration de commande de congestion, une commande de congestion spécifique au domaine ou divisée, une exposition de trafic, et une liaison à une liste plus détaillée d'un ensemble de caractéristiques.

13. Dispositif de réseau selon la revendication 11 ou 12, dans lequel les informations de découverte comprennent une identité du dispositif de réseau.

14. Dispositif de réseau selon la revendication 13, dans lequel l'identité du dispositif de réseau comprend un ou plusieurs parmi son identifiant mondial ou son nom commun, son certificat de nœud, et son adresse IP.

15. Support de stockage non transitoire lisible par ordinateur (818, 848) qui fournit des instructions qui, lorsqu'elles sont exécutées, amènent un dispositif de réseau à réaliser :
la réception (502) d'un premier paquet à l'intérieur d'un datagramme de protocole de datagramme utilisateur, UDP, dans lequel le premier paquet est un paquet initial pour une session QUIC entre un dispositif de réseau client et un dispositif de réseau serveur et le datagramme UDP se trouve à l'intérieur d'un paquet de protocole Internet, IP ;
la détection s'il existe ou non un deuxième paquet d'informations de découverte dans le paquet IP reçu, dans lequel :
s'il n'existe pas de deuxième paquet dans le paquet IP reçu, le procédé comprend :
la création d'un deuxième paquet, et
l'insertion (504) d'informations de découverte dans le deuxième paquet créé à l'intérieur du paquet IP, et
s'il existe un deuxième paquet dans le paquet IP reçu, le procédé comprend :
l'insertion des informations de découverte dans le deuxième paquet existant à l'intérieur du paquet IP, et dans lequel les informations de découverte comprennent un ensemble de caractéristiques prises en charge par le dispositif de réseau ; et
la transmission (506) du paquet IP après l'insertion sur la base d'une destination du paquet IP.
